(19) Europäisches Patentamt
European Patent Office
Office européen des brevets

(11) EP 1 636 282 B1

# (12) EUROPÄISCHE PATENTSCHRIFT

(45) Veröffentlichungstag und Bekanntmachung des Hinweises auf die Patenterteilung:
**02.05.2007 Patentblatt 2007/18**

(21) Anmeldenummer: **04739590.0**

(22) Anmeldetag: **04.06.2004**

(51) Int Cl.:
***C08F 291/00*** (2006.01) ***C08F 295/00*** (2006.01)
***C08F 2/00*** (2006.01)

(86) Internationale Anmeldenummer:
**PCT/EP2004/006036**

(87) Internationale Veröffentlichungsnummer:
**WO 2004/108782 (16.12.2004 Gazette 2004/51)**

## (54) VERFAHREN ZUR HERSTELLUNG EINER WÄSSRIGEN POLYMERISATDISPERSION

METHOD FOR THE PRODUCTION OF AN AQUEOUS POLYMER DISPERSION

PROCEDE DE PRODUCTION D'UNE DISPERSION POLYMERE AQUEUSE

(84) Benannte Vertragsstaaten:
**AT BE BG CH CY CZ DE DK EE ES FI FR GB GR HU IE IT LI LU MC NL PL PT RO SE SI SK TR**

(30) Priorität: **06.06.2003 DE 10326127**

(43) Veröffentlichungstag der Anmeldung:
**22.03.2006 Patentblatt 2006/12**

(73) Patentinhaber: **BASF Aktiengesellschaft**
**67056 Ludwigshafen (DE)**

(72) Erfinder:
- **SCHMID, Markus**
  **67146 Deidesheim (DE)**
- **CHOWDHRY, Mubarik, Mahmood**
  **F-67000 Strasbourg (FR)**
- **DISTLER, Dieter**
  **74321 Bietigheim-Bissingen (DE)**
- **LEYRER, Reinhold, J.**
  **67125 Dannstadt (DE)**

(56) Entgegenhaltungen:
**EP-A- 0 955 323** **GB-A- 1 205 635**
**GB-A- 1 283 213**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 636 282 B1

## Beschreibung

Gegenstand der vorliegenden Erfindung ist ein Verfahren zur Herstellung einer wässrigen Polymerisatdispersion durch Polymerisation wenigstens eines ethylenisch ungesättigten Monomeren B in wässrigem Medium in Anwesenheit von Teilchen wenigstens eines Polymerisats A (Polymerisatteilchen A) und wenigstens eines Dispergiermittels, welches dadurch gekennzeichnet ist, dass die Polymerisation des wenigstens einen ethylenisch ungesättigten Monomeren B in Anwesenheit von Polymerisatteilchen A mit einem gewichtsmittleren Teilchendurchmesser ≥ 1 nm erfolgt, wobei das Polymerisat A entweder

a) durch eine mit wenigstens einem Radikalinitiator initiierte Polymerisation oder
b) durch eine mit wenigstens einem Übergangsmetallkomplex initiierte Polymerisation

von wenigstens einem ethylenisch ungesättigten Monomeren A (Monomer A) erhalten wurde
und die Polymerisation des wenigstens einen ethylenisch ungesättigten Monomeren B (Monomer B)

i) im Fall a) durch wenigstens einen Übergangsmetallkomplex und
ii) im Fall b) durch wenigstens einen Radikalinitiator

initiiert wird.

Die nach dem erfindungsgemäßen Verfahren zugänglichen wässrigen Polymerisatdispersionen können als Bindemittel in Klebstoffen, Dichtmassen, Kunststoffputzen, Papierstreichmassen, Anstrichmitteln, zur Herstellung von Vliesstoffen sowie zur Modifizierung von mineralischen Bindemitteln oder anderen Kunststoffen verwendet werden. Ähnliche Einsatzmöglichkeiten gibt es auch für die aus den wässrigen Polymerisatdispersionen zugänglichen Polymerisatpulver.

Wässrige Polymerisatdispersionen (Latices) sind allgemein bekannt. Es handelt sich um fluide Systeme, die als disperse Phase in wässrigem Dispergiermedium aus mehreren ineinander verschlungenen Polymerisatketten bestehende Polymerisatknäuel (sogenannte Polymerisatteilchen) in disperser Verteilung enthalten. Der gewichtsmittlere Durchmesser der Polymerisatteilchen liegt häufig im Bereich von 10 bis 5000 nm.

Ebenso wie Polymerisatlösungen beim Verdampfen des Lösungsmittels, weisen wässrige Polymerisatdispersionen beim Verdampfen des wässrigen Dispergiermediums das Potential zur Ausbildung von Polymerisatfilmen auf, weshalb sie insbesondere als Bindemittel Anwendung finden. Aufgrund ihrer umweltfreundlichen Eigenschaften gewinnen sie zunehmend an Bedeutung.

Die Herstellung wässriger Polymerisatdispersionen erfolgt häufig durch radikalisch initiierte wässrige Emulsionspolymerisation [vgl. z.B. Encyclopedia of Polymer Science and Engineering, Vol. 8, Seite 659 ff. (1987); D.C. Blackley, in High Polymer Latices, Vol. 1, Seite 35 ff. (1966); H. Warson, The Applications of Synthetic Resin Emulsions, Seite 246 ff., Kapitel 5 (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin 1969]. Kennzeichnend für dieses Verfahren ist, dass als Polymerisationskatalysatoren sogenannte Radikalbildner und als Hauptmonomere in der Regel sogenannte polare Monomere eingesetzt werden.

Auch die Herstellung mehrphasiger wässriger Polymerisatdispersionen durch radikalisch initiierte wässrige Emulsionspolymerisation ethylenisch ungesättigter Verbindungen (Monomere) ist dem Fachmann hinreichend bekannt. Beispiele hierfür finden sich in EP-A 955323, US-A 4,683,269 sowie in Billig-Peters, "Kern-Schale Dispersionen mit Hilfe polymerer Azo-Initiatoren", Dissertation Universität Bayreuth, 1991.

Andererseits sind eine Vielzahl von Polymerisationskatalysatoren bekannt, deren Polymerisationswirkung nicht auf Radikalbildung sondern auf einer sogenannten Monomereninsertion basiert. Für diese Polymerisationsverfahren sind insbesondere sogenannte unpolare Monomere geeignet. Wenn überhaupt, werden hierbei polare Monomere nur in untergeordnetem Maße zur Modifizierung der Polymereigenschaften verwendet. Die für diese Polymerisationsverfahren verwendeten Polymerisationskatalysatoren sind insbesondere katalytisch aktive Übergangsmetallkomplexe bzw. Übergangsmetallkomplexe in Kombination mit Verbindungen, welche die Übergangsmetallkomplexe aktivieren, sogenannten Aktivatoren. Aufgrund der in der Regel hohen Hydrolyseempfindlichkeit der Übergangsmetallkomplexe bzw. Übergangsmetallkomplex/Aktivator-Kombinationen erfolgen diese Polymerisationsreaktionen üblicherweise in Form einer Bulkpolymerisation, wobei das Monomer gleichzeitig Reaktant und Lösungmittel ist oder in Form einer Lösungspolymerisation, wobei ein nichtwässriges, häufig aprotisches organisches Lösungsmittel sowohl den Übergangsmetallkomplex bzw. die Übergangsmetallkomplex/Aktivator-Kombination, das Monomer und das gebildete Polymer gelöst enthält. Beispielhaft hierfür genannt seien die Schriften DE-A 10017660, DE-A 10118633, Leclerc et al., Angew. Chem., Int. Ed. Engl. 1998, 37, Seiten 922ff., Ziegler, Angew. Chem., 1955, 67, Seiten 541ff., Natta, J. Am. Chem. Soc. 1962, 84, Seiten 1488ff. sowie Sinn und Kaminsky, Adv. Organomet. Chem. 1980, 18, Seiten 99ff..

In jüngster Zeit wird verstärkt über die Polymerisation von Monomeren durch Monomereninsertion in wässrigem

Medium mit hydrolysestabilen Übergangsmetallkomplexen bzw. Übergangsmetallkomplex/Aktivator-Kombinationen berichtet. Beispielhaft genannt seien hier die Schriften von Mecking, Angew. Chem. Int. Ed. 2001, 40, Seiten 534 bis 540, Bauers und Mecking, Angew. Chem. Int. Ed. 2001, 40, Seiten 3020 bis 3022, Mecking et al. Chem. Commun. 2000, Seiten 301 und 302, Tomov et al., Macromol. Symp. 2000, 150, Seiten 53 bis 58 sowie die Offenlegungsschriften WO 01/44325, WO 00/20464, DE-A 2923206 und DE-A 3345785.

Auch die Polymerisation von Monomeren mit Kohlenmonoxid in wässrigem Medium über eine Monomereninsertion mit hydrolysestabilen Übergangsmetallkomplexen bzw. Übergangsmetallkomplex/Aktivator-Kombinationen ist bekannt. Beispiele hierfür finden sich in Held et al., Macromolecules 2002, 35, Seiten 3342 bis 3347, Lindner et al., J. Organomet. Chem. 2000, 602, Seiten 173ff., Sheldon et al., Angew. Chem. 2000, 112, Seiten 825ff. sowie in den Offenlegungsschriften WO 00/63277, DE-A 19829520, DE-A 19829520, DE-A 19917920 und DE-A 10061877.

Daneben können auch konjugierte Diene, wie beispielsweise Butadien, in wässrigem Medium mit hydrolysestabilen Übergangsmetallkomplexen bzw. Übergangsmetallkomplex/Aktivator-Kombinationen mittels Insertion polymerisiert werden [siehe beispielsweise Ono und Kato, J. Polym. Sci. A. 2000, 38, Seiten 1083 bis 1089, Rinehart, J. Polym. Sci. C. 1969, 27, Seiten 7 bis 25 sowie DE-A 2332921 und EP-A 152175].

Ferner offenbart die nicht vorveröffentlichte deutsche Anmeldung mit dem Aktenzeichen DE-A 10322466.1 die mittels einem festen Polymerisationskatalysator durchgeführte Polymerisation von ethylenisch ungesättigten Monomeren in wässrigem Medium, die ebenfalls nicht vorveröffentlichte deutsche Anmeldung mit dem Aktenzeichen DE-A 10229977.3 die entsprechende Polymerisation mittels in Wachspartikeln enthaltener Polymerisationskatalysatoren und die auch nicht vorveröffentlichte deutsche Anmeldung mit dem Aktenzeichen DE-A 10133042.1 die Herstellung wässriger Polymerisatdispersionen durch Übergangsmetallkomplex-katalysierte Polymerisation ethylenisch ungesättigter Verbindungen in Anwesenheit von Kohlenmonoxid mittels eines Miniemulsionspolymerisationsverfahrens.

Auch die Herstellung mehrphasiger wässriger Polymerisatdispersionen durch Polymerisation ethylenisch ungesättigter Monomerer mittels hydrolysestabiler Übergangsmetallkomplexe bzw. Übergangsmetallkomplex/Aktivator-Kombinationen ist dem Fachmann hinreichend bekannt. Beispiele hierfür finden sich beispielsweise in Ono und Kato, J. Polym. Sci. A. 2000, 38, Seiten 1083 bis 1089.

Die Herstellung wässriger Polymerisatdispersionen mittels der radikalischen Emulsionspolymerisation weist den Vorteil auf, dass die Polymerisateigenschaften, beispielsweise die Glasübergangstemperatur, durch geeignete Auswahl der zur Polymerisation eingesetzten Monomere in einfacher Weise breit variierbar sind und die Hilfsstoffe, wie beispielsweise Radikalinitiatoren, Regler etc. günstig verfügbare Verbindungen darstellen. Nachteilig ist aber, dass die zur Polymerisation üblicherweise als Hauptmonomere verwendeten ethylenisch ungesättigten Verbindungen, wie beispielsweise Ester der Acryl- oder Methacrylsäure, Styrol, Vinylchlorid, Vinylidenchlorid sowie die Vinylester organischer Monocarbonsäuren aufgrund der zu ihrer Herstellung erforderlichen Reaktionsschritte relativ teuer sind, bzw. günstig verfügbare Monomere, wie beispielsweise Ethen, radikalisch häufig nur langsam polymerisieren. Auf der anderen Seite können zur Herstellung wässriger Polymerisatdispersionen mittels Übergangsmetallkomplexkatalysierter Polymerisation günstig verfügbare und rasch abreagierende unpolare Monomere, wie beispielsweise Ethen, Propen, Buten, Butadien etc. eingesetzt werden, während polare Monomere, wie beispielsweise Ester der Acryl- oder Methacrylsäure, Styrol, Vinylchlorid, Vinylidenchlorid sowie die Vinylester organischer Monocarbonsäuren, zwar ebenfalls eingesetzt werden können, häufig aber deutlich langsamer abreagieren. Nachteilig ist ferner, dass die zur Übergangsmetallkomplex-katalysierten Polymerisation geeigneten Metallkomplexe in der Regel teurer sind als die zur radikalisch initiierten wässrigen Emulsionspolymerisation verwendeten Radikalinitiatoren.

Vor diesem Hintergrund des Standes der Technik bestand die Aufgabe der vorliegenden Erfindung darin, ein Verfahren zur Herstellung wässriger Polymerisatdispersionen zur Verfügung zu stellen, welches die Vorteile der radikalisch initiierten Polymerisation und der Übergangsmetallkomplex-katalysierten Polymerisation in sich vereinigt.

Demgemäss wurde das eingangs definierte Verfahren gefunden.

Verfahrenswesentlich ist, dass dann, wenn das Polymerisat A durch eine mit wenigstens einem Radikalinitiator initiierte Polymerisation von wenigstens einem ethylenisch ungesättigten Monomeren A erhalten wurde, die Polymerisation des wenigstens einen ethylenisch ungesättigten Monomeren B durch wenigstens einen Übergangsmetallkomplex initiiert wird (Verfahren 1) und dann, wenn das Polymerisat A durch eine, mit wenigstens einem Übergangsmetallkomplex initiierte Polymerisation von wenigstens einem ethylenisch ungesättigten Monomeren A erhalten wurde, die Polymerisation des wenigstens einen ethylenisch ungesättigten Monomeren B durch wenigstens einen Radikalinitiator initiiert wird (Verfahren 2).

Als wenigstens ein ethylenisch ungesättigtes Monomer für die radikalisch initiierte Polymerisation (Monomere A in Verfahren 1 und Monomere B in Verfahren 2) kommen insbesondere in einfacher Weise radikalisch polymerisierbare ethylenisch ungesättigte Monomere in Betracht, wie beispielsweise Ethylen, vinylaromatische Monomere, wie Styrol, $\alpha$-Methylstyrol, o-Chlorstyrol oder Vinyltoluole, Vinylhalogenide, wie Vinylchlorid oder Vinylidenchlorid, Ester aus Vinylalkohol und 1 bis 18 C-Atome aufweisenden Monocarbonsäuren, wie Vinylacetat, Vinylpropionat, Vinyl-n-butyrat, Vinyllaurat und Vinylstearat, Ester aus vorzugsweise 3 bis 6 C-Atome aufweisenden $\alpha,\beta$-monoethylenisch ungesättigten Mono- und Dicarbonsäuren, wie insbesondere Acrylsäure, Methacrylsäure, Maleinsäure, Fumarsäure und Itaconsäure,

mit im allgemeinen 1 bis 12, vorzugsweise 1 bis 8 und insbesondere 1 bis 4 C-Atome aufweisenden Alkanolen, wie besonders Acrylsäure- und Methacrylsäuremethyl-, -ethyl-, -n-butyl-, -isobutyl-, pentyl-, -hexyl-, -heptyl-, -octyl-, -nonyl-, -decyl- und -2-ethylhexylester, Fumar-und Maleinsäuredimethylester oder -di-n-butylester, Nitrile α,β-monoethylenisch ungesättigter Carbonsäuren, wie Acrylnitril, Methacrylnitril, Fumarsäuredinitril, Maleinsäuredinitril sowie $C_{4-8}$-konjugierte Diene, wie 1,3-Butadien und Isopren. Die genannten Monomere bilden in der Regel die Hauptmonomeren, die, bezogen auf die Gesamtmonomerenmenge, einen Anteil von mehr als 50 Gew.-%, bevorzugt mehr als 80 Gew.-% auf sich vereinen. In aller Regel weisen diese Monomeren in Wasser bei Normalbedingungen [20 °C, 1 bar (absolut)] lediglich eine mäßige bis geringe Löslichkeit auf.

Monomere, die unter den vorgenannten Bedingungen eine erhöhte Wasserlöslichkeit aufweisen, sind solche, die entweder wenigstens eine Säuregruppe und/oder deren entsprechendes Anion bzw. wenigstens eine Amino-, Amido-, Ureido- oder N-heterocyclische Gruppe und/oder deren am Stickstoff protonierten oder alkylierten Ammoniumderivate enthalten. Beispielhaft genannt seien α,β-monoethylenisch ungesättigte Mono- und Dicarbonsäuren und deren Amide, wie z.B. Acrylsäure, Methacrylsäure, Maleinsäure, Fumarsäure, Itaconsäure, Acrylamid und Methacrylamid, ferner Vinylsulfonsäure, 2-Acrylamido-2-methylpropansulfonsäure, Styrolsulfonsäure und deren wasserlösliche Salze sowie N-Vinylpyrrolidon, 2-Vinylpyridin, 4-Vinylpyridin, 2-Vinylimidazol, 2-(N,N-Dimethylamino)ethylacrylat, 2-(N,N-Dimethylamino)ethylmethacrylat, 2-(N,N-Diethylamino)ethylacrylat, 2-(N,N-Diethylamino)ethylmethacrylat, 2-(N-tert.-Butylamino) ethylmethacrylat, N-(3-N',N'-Dimethylaminopropyl)methacrylamid und 2-(1-Imidazolin-2-onyl)ethylmethacrylat. Im Normalfall werden die vorgenannten Monomeren lediglich als modifizierende Monomere in Mengen, bezogen auf die Gesamtmonomerenmenge, von weniger als 10 Gew.-%, bevorzugt weniger als 5 Gew.-% eingesetzt.

Monomere, die üblicherweise die innere Festigkeit der Verfilmungen der Polymermatrix erhöhen, weisen normalerweise wenigstens eine Epoxy-, Hydroxy-, N-Methylol- oder Carbonylgruppe, oder wenigstens zwei nicht konjugierte ethylenisch ungesättigte Doppelbindungen auf. Beispiele hierfür sind zwei Vinylreste aufweisende Monomere, zwei Vinylidenreste aufweisende Monomere sowie zwei Alkenylreste aufweisende Monomere. Besonders vorteilhaft sind dabei die Di-Ester zweiwertiger Alkohole mit α,β-monoethylenisch ungesättigten Monocarbonsäuren unter denen die Acryl- und Methacrylsäure bevorzugt sind. Beispiele für derartige zwei nicht konjugierte ethylenisch ungesättigte Doppelbindungen aufweisende Monomere sind Alkylenglykoldiacrylate und - dimethacrylate, wie Ethylenglykoldiacrylat, 1,2-Propylenglykoldiacrylat, 1,3-Propylenglykoldiacrylat, 1,3-Butylenglykoldiacrylat, 1,4-Butylenglykoldiacrylate und Ethylenglykoldimethacrylat, 1,2-Propylenglykoldimethacrylat, 1,3-Propylenglykoldimethacrylat, 1,3-Butylenglykoldimethacrylat, 1,4-Butylenglykoldimethacrylat sowie Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat, Triallylcyanurat oder Triallylisocyanurat. In diesem Zusammenhang von besonderer Bedeutung sind auch die Methacrylsäure- und Acrylsäure-$C_1$-$C_8$-Hydroxyalkylester wie n-Hydroxyethyl-, n-Hydroxypropyl- oder n-Hydroxybutylacrylat und -methacrylat sowie Verbindungen, wie Diacetonacrylamid und Acetylacetoxyethylacrylat bzw. -methacrylat. Häufig werden die vorgenannten Monomeren in Mengen von bis 10 zu Gew.-%, bevorzugt jedoch weniger als 5 Gew.-%, jeweils bezogen auf die Gesamtmonomerenmenge, verwendet.

Erfindungsgemäß besonders günstig einsetzbare Monomerenmischungen für die radikalische Polymerisationsstufe sind solche, die

- 50 bis 99,9 Gew.-% Ester der Acryl- und/oder Methacrylsäure mit 1 bis 12 C-Atome aufweisenden Alkanolen und/oder Styrol, oder
- 50 bis 99,9 Gew.-% Styrol und/oder Butadien, oder
- 50 bis 99,9 Gew.-% Vinylchlorid und/oder Vinylidenchlorid, oder
- 40 bis 99,9 Gew.-% Vinylacetat, Vinylpropionat, Vinylester der Versaticsäure und/oder Vinylester langkettiger Fettsäuren

enthalten.

Insbesondere sind erfindungsgemäß solche Monomerenmischungen für die radikalische Polymerisationsstufe einsetzbar, die

- 0,1 bis 5 Gew.-% wenigstens eine 3 bis 6 C-Atome aufweisende α,β-monoethylenisch ungesättigte Mono- und Dicarbonsäure und/oder deren Amid und
- 50 bis 99,9 Gew.-% wenigstens ein Ester der Acryl- und/oder Methacrylsäure mit 1 bis 12 C-Atome aufweisenden Alkanolen und/oder Styrol, oder

- 0,1 bis 5 Gew.-% wenigstens eine 3 bis 6 C-Atome aufweisende $\alpha,\beta$-monoethylenisch ungesättigte Mono- und Dicarbonsäure und/oder deren Amid und

- 50 bis 99,9 Gew.-% Styrol und/oder Butadien, oder

- 0,1 bis 5 Gew.-% wenigstens eine 3 bis 6 C-Atome aufweisende $\alpha,\beta$-monoethylenisch ungesättigte Mono- und Dicarbonsäure und/oder deren Amid und

- 50 bis 99,9 Gew.-% Vinylchlorid und/oder Vinylidenchlorid, oder

- 0,1 bis 5 Gew.-% wenigstens eine 3 bis 6 C-Atome aufweisende $\alpha,\beta$-monoethylenisch ungesättigte Mono- und Dicarbonsäure und/oder deren Amid und

- 40 bis 99,9 Gew.-% Vinylacetat, Vinylpropionat, Vinylester der Versaticsäure und/oder Vinylester langkettiger Fettsäuren

enthalten.

Entsprechend werden durch die radikalische Polymerisation Polymerisate erhalten, welche aus vorgenannten Monomeren in einpolymerisierter Form aufgebaut sind.

Von Bedeutung ist, dass die Monomeren bzw. Monomerenmischungen auch in der dem Fachmann bekannten Stufen- oder Gradientenfahrweise polymerisiert werden können. Auch sei an dieser Stelle festgehalten, dass im Rahmen dieser Schrift der Begriff Monomer auch Monomerenmischungen und der Begriff Polymerisat auch Copolymerisate umfassen soll.

Wesentlich ist, dass die Polymerisatteilchen A in beiden Verfahren häufig als stabile wässrige Dispersionen eingesetzt werden. Diese können sowohl in Form einer Primärals auch in Form einer Sekundärdispersion vorliegen.

Die Herstellung einer wässrigen Polymerisatsekundärdispersion in Verfahren 1, beispielsweise über eine radikalische Lösungspolymerisation, Einbringen dieses Lösungspolymerisats unter Entfernung des Lösungsmittels in das wässrige Medium unter Ausbildung einer wässrigen Dispersion der Polymerisatteilchen A, ist dem Fachmann geläufig (siehe hierzu beispielsweise EP-A 467906, EP-A 691384 oder Schlarb et al., Prog. Org. Coat. 1995 (29), Seiten 201 bis 208). Bevorzugt werden die Polymerisatteilchen A in Verfahren 1 jedoch in Form einer wässrigen Primärdispersion eingesetzt.

Ebenso wie die radikalische Polymerisation von Monomer B in Verfahren 2 erfolgt auch die Ausbildung einer Primärdispersion von Polymerisat A-Teilchen in Verfahren 1 nach der Methode der dem Fachmann geläufigen radikalisch initiierten wässrigen Emulsionspolymerisation. Diese erfolgt üblicherweise dergestalt, dass man das wenigstens eine Monomer A oder B unter Zusatz wenigstens eines Dispergiermittels in wässrigem Medium dispers verteilt und mittels wenigstens eines radikalischen Polymerisationsinitiators polymerisiert.

Als geeignete radikalische Polymerisationsinitiatoren kommen alle diejenigen in Betracht, die in der Lage sind, eine radikalische wässrige Emulsionspolymerisation auszulösen. Es kann sich dabei prinzipiell sowohl um Peroxide als auch um Azoverbindungen handeln. Selbstverständlich kommen auch Redoxinitiatorsysteme in Betracht. Als Peroxide können prinzipiell anorganische Peroxide, wie Wasserstoffperoxid oder Peroxodisulfate, wie die Mono- oder Di-Alkalimetall- oder Ammoniumsalze der Peroxodischwefelsäure, wie beispielsweise deren Mono- und Di-Natrium-, -Kalium- oder Ammoniumsalze oder organische Peroxide, wie Alkylhydroperoxide, beispielsweise tert.-Butyl-, p-Mentyl- oder Cumylhydroperoxid, sowie Dialkyl- oder Diarylperoxide, wie Di-tert.-Butyl- oder Di-Cumylperoxid eingesetzt werden. Als Azoverbindung finden im wesentlichen 2,2'-Azobis(isobutyronitril), 2,2'-Azobis(2,4-dimethylvaleronitril) und 2,2'-Azobis (amidinopropyl)dihydrochlorid (entspricht V-50 von Wako Chemicals) Verwendung. Als Oxidationsmittel für Redoxinitiatorsysteme kommen im wesentlichen die oben genannten Peroxide in Betracht. Als entsprechende Reduktionsmittel können Schwefelverbindungen mit niedriger Oxidationsstufe, wie Alkalisulfite, beispielsweise Kalium- und/oder Natriumsulfit, Alkalihydrogensulfite, beispielsweise Kalium- und/oder Natriumhydrogensulfit, Alkalimetabisulfite, beispielsweise Kalium- und/oder Natriummetabisulfit, Formaldehydsulfoxylate, beispielsweise Kalium- und/oder Natriumformaldehydsulfoxylat, Alkalisalze, speziell Kalium- und/oder Natriumsalze aliphatische Sulfinsäuren und Alkalimetallhydrogensulfide, wie beispielsweise Kalium- und/oder Natriumhydrogensulfid, Salze mehrwertiger Metalle, wie Eisen-(II)-sulfat, Eisen-(II)-Ammoniumsulfat, Eisen-(II)-phosphat, Endiole, wie Dihydroxymaleinsäure, Benzoin und/oder Ascorbinsäure sowie reduzierende Saccharide, wie Sorbose, Glucose, Fructose und/oder Dihydroxyaceton eingesetzt werden. In der Regel beträgt die Menge an radikalischem Polymerisationsinitiator 0,05 bis 5,0 Gew.-Teile, oft 0,1 bis 3,0 Gew.-Teile und häufig 0,2 bis 2,0 Gew.-Teile, jeweils bezogen auf 100 Gew.-Teile an in der radikalischen Polymerisationsstufe eingesetzten Monomeren.

Die Art und Weise, in der der Polymerisationsinitiator dem Polymerisationsgemisch zugegeben wird, ist hinsichtlich des Erfolgs des erfindungsgemäßen Verfahrens eher von untergeordneter Bedeutung. Der Polymerisationsinitiator kann sowohl vollständig im Polymerisationsgefäß vorgelegt, als auch nach Maßgabe seines Verbrauchs im Verlauf der radikalisch wässrigen Emulsionspolymerisation kontinuierlich oder stufenweise zugesetzt werden. Im einzelnen hängt dies in an sich dem Fachmann bekannter Weise sowohl von der chemischen Natur des Initiatorsystems als auch von der Polymerisationstemperatur und den zu polymerisierenden Monomeren ab.

Zur Einstellung des Molekulargewichtes können gegebenenfalls zusätzlich dem Fachmann bekannte Molekulargewichtsregler, beispielsweise Alkohole, wie Butendiol oder iso-Propanol, Mercaptoverbindungen, wie 2-Mercaptoethanol oder tert.-Dodecylmercaptan oder Haloformverbindungen, wie Bromoform oder Chloroform, üblicherweise in Mengen von 0,1 bis 5 Gew.-%, bezogen auf die Gesamtmenge der in der radikalischen Polymerisationsstufe eingesetzten Monomeren, zugesetzt werden.

Als Reaktionstemperatur für die radikalische wässrige Emulsionspolymerisation kommt der gesamte Bereich von 0 bis 170 °C in Betracht. Dabei werden in der Regel Temperaturen von 50 bis 120 °C, häufig 60 bis 110°C und oft ≥ 70 bis 100 °C angewendet. Die radikalische wässrige Emulsionspolymerisation kann bei einem Druck kleiner, gleich oder größer 1 bar (absolut) durchgeführt werden. Vorzugsweise werden leichtflüchtige Monomere wie Ethylen, Butadien oder Vinylchlorid unter erhöhtem Druck polymerisiert. Dabei kann der Druck 1,2, 1,5, 2, 5, 10, 15 bar oder noch höhere Werte einnehmen. Werden Emulsionspolymerisationen im Unterdruck durchgeführt, werden Drücke von ≤ 950 mbar, häufig von ≤ 900 mbar und oft ≤ 850 mbar (absolut) eingestellt. Vorteilhaft wird die radikalische wässrige Emulsionspolymerisation unter Inertgasatmosphäre, wie beispielsweise unter Stickstoff oder Argon durchgeführt.

Üblicherweise werden die Monomeren bis zu einem Umsatz von wenigstens 80 % polymerisiert, wobei jedoch in der Regel ein Monomerenumsatz ≥ 90 %, ≥ 95 % oder ≥ 98 % bevorzugt wird.

Als wenigstens ein ethylenisch ungesättigtes Monomer für die mittels wenigstens eines Übergangsmetallkomplexes initiierte Polymerisation (Monomere B in Verfahren 1 und Monomere A in Verfahren 2) kommen erfindungsgemäß sowohl reine ethylenisch ungesättigte unpolare Kohlenwasserstoffverbindungen als auch polare heteroatomhaltige α-Olefine, wie (Meth)acrylsäureester sowie Homoallyl- oder Allylalkohole, -ether oder -halogenide in Betracht. Unter den reinen ethylenisch ungesättigten unpolaren Kohlenwasserstoffen sind $C_2$- bis $C_{20}$-1-Alkene geeignet. Unter diesen sind die niedermolekularen Alkene, wie beispielsweise Ethen oder α-Alkene mit 3 bis 20 C-Atomen, wie Propen, 1-Buten, 1-Penten, 1-Hexen, 1-Hepten, 1-Octen oder 1-Decen hervorzuheben. Selbstverständlich können auch cyclische Olefine, wie beispielsweise Cyclopenten, Cyclohexen, Dicyclopentadien oder Norbornen, konjugierte Diene, wie beispielsweise 1,3-Butadien (Butadien), 2-Chlorbutadien, 2-Methylbutadien oder 2,3-Dimethylbutadien, aromatische Olefinverbindungen, wie Styrol, α-Methylstyrol oder ortho-, meta- bzw. para-Vinyltoluol sowie Vinylester, wie Vinylacetat oder Vinylpropionat eingesetzt werden. Besonders geeignet sind jedoch die $C_2$- bis $C_{20}$-1-Alkene. Unter diesen sind Ethen, Propen, 1-Buten, 1-Penten, 1-Hexen oder 1-Octen sowie 1-Decen, 1-Dodecen, 1-Tetradecen, 1-Hexadecen und 1-Octadecen sowie diese enthaltende Olefinfraktionen eines Crackers hervorzuheben. Selbstverständlich ist es erfindungsgemäß möglich, die vorgenannten Monomere einzeln oder im Gemisch einzusetzen. Die genannten Monomere bilden in der Regel die Hauptmonomere, die, bezogen auf die Gesamtmonomerenmenge, einen Anteil ≥ 50 Gew.-%, insbesondere ≥ 80 Gew.-% oder ≥ 90 Gew.-% auf sich vereinen. Häufig besteht das mittels wenigstens eines Übergangsmetallkomplexes zu polymerisierende Monomerengemisch zu 100 Gew.-% aus wenigstens einem der vorgenannten Monomeren.

Darüber hinaus ist es jedoch auch möglich, die vorgenannten Monomeren im Gemisch mit solchen polaren ethylenisch ungesättigten Monomeren einzusetzen, die als Strukturelement wenigstens eine Amidgruppe, eine Säuregruppe und/oder deren entsprechendes Anion enthalten. Beispielhaft genannt seien α,β-monoethylenisch ungesättigte Mono- und Dicarbonsäuren sowie deren Amide, wie Acrylsäure, Methacrylsäure, Maleinsäure, Fumarsäure, Itaconsäure, Acrylamid, Methacrylamid, ferner Vinylsulfonsäure, 2-Acrylamido-2-methylpropansulfonsäure, Styrolsulfonsäure, 10-Undecensäure, 3-Butensäure, 4-Pentensäure, 5-Hexensäure und deren entsprechenden Alkalimetall-und Ammoniumsalze. Im Normalfall sind die amid- oder säuregruppenhaltigen Monomeren lediglich als modifizierende Monomere in Mengen ≤ 50 Gew.-%, ≤ 10 Gew.-%, bevorzugt ≤ 5 Gew.-%, jeweils bezogen auf die Gesamtmonomerenmenge, enthalten.

Von Bedeutung ist, dass auch die durch Polymerisation von wenigstens einem Mononeren A mit wenigstens einen Übergangsmetallkomplex zugänglichen Polymerisat A-Teilchen sowohl in Form einer Primär- als auch in Form einer Sekundärdispersion vorliegen können.

Die Herstellung einer wässrigen Polymerisatsekundärdispersion in Verfahren 2, beispielsweise über eine Übergangsmetallkomplex-katalysierte Lösungspolymerisation, Einbringen dieses Lösungspolymerisats unter Entfernung des Lösungsmittels in das wässrige Medium unter Ausbildung einer wässrigen Dispersion der Polymerisatteilchen A, ist dem Fachmann prinzipiell geläufig (siehe hierzu beispielsweise DE-A 19821746 oder Echersley et al., Am. Chem. Soc., Div. Polym. Chemistry, 1977 (38) Seiten 630ff.). Bevorzugt werden die Polymerisatteilchen A in Verfahren 2 jedoch in Form einer wässrigen Primärdispersion eingesetzt.

Ebenso wie die Übergangsmetallkomplex-katalysierte Polymerisation von Monomer B in Verfahren 1 erfolgt auch die Ausbildung einer Primärdispersion von Polymerisat A-Teilchen in Verfahren 2 nach der Methode der dem Fachmann geläufigen Übergangsmetallkomplex-katalysierten Polymerisation in wässrigem Medium. Diese erfolgt üblicherweise dergestalt, dass man das wenigstens eine Monomer A oder B unter Zusatz wenigstens eines Dispergiermittels

mittels wenigstens eines geeigneten Übergangsmetallkomplexes in wässrigem Medium polymerisiert. Von Bedeutung ist, dass diese Polymerisation auch in Anwesenheit von Kohlenmonoxid erfolgen kann.

Für die Übergangsmetallkomplex-katalysierte Polymerisation sind all diejenigen Übergangsmetallkomplexe geeignet, die in der Lage sind, eine Polymerisation von ethylenisch ungesättigten Monomeren in wässrigem Medium zu initiieren. Beispielsweise sind die im Stand der Technik genannten Komplexe für die erfindungsgemäße Polymerisation geeignet.

Als für die in wässrigem Medium zur Polymerisation von Monomer A bzw. Monomer B insbesondere einsetzbaren Übergangsmetallkomplexe seien beispielhaft genannt die in DE-A 10133042 offenbarten Komplexe

[1,3-Bis(diphenylphosphino)propan]-,
[1,3-Bis(di(2-methoxyphenyl)phosphino)propan]-,
[1,3-Bis(dimethylphosphino)propan]-,
[1,3-Bis(dietyhlphosphino)propan]-,
[1,3-Bis(di(n-propyl)phosphino)propan]-,
[1,3-Bis(di(iso-propyl)phosphino)propan]-,
[1,3-Bis(di(n-butyl)phosphino)propan]-,
[1,3-Bis(di(n-pentyl)phosphino)propan]-,
[1,3-Bis(di(n-hexyl)phosphino)propan]-,
[1,3-Bis(di(iso-hexyl)phosphino)propan]-,
[1,3-Bis(di(neo-hexyl)phosphino)propan]-,
[1,3-Bis(di(n-heptyl)phosphino)propan]-,
[1,3-Bis(di(3-(cyclopentyl)propyl)phosphino)propan]-,
[1,3-Bis(di(n-octyl)phosphino)propan]-,
[1,3-Bis(di(n-nonyl)phosphino)propan]-,
[1,3-Bis(di(n-decyl)phosphino)propan]-,
[1,3-Bis(di(n-dodecyl)phosphino)propan]-,
[1,3-Bis(di(n-tetradecyl)phosphino)propan]-,
[1,3-Bis(di(3-(cyclohexyl)propyl)phosphino)propan]- oder
[1,3-Bis(di(n-hexadecyl)phosphino)propan]-palladium(11)acetat,
die in DE-A 10061877 offenbarten Komplexe
[1,3-Bis(di-hydroxyphenyl)phosphinopropan]-,
[1,3-Bis(di-4-hydroxybutyl)phosphinopropan]-,
[1,3-Bis(di-4-methylol-5-hydroxypentyl)phosphinopropan]-,
[1,3-Bis(di-5-hydroxypentyl)phosphinopropan]-,
[1,3-Bis(di-6-hydroxyhexyl)phosphinopropan]-,
[1,3-Bis(di(3-hydroxycyclopentyl)propyl)phosphinopropan]-,
[1,3-Bis(di-8-hydroxyoctyl)phosphinopropan]-,
[1,3-Bis(di-3-hydroxycyclohexyl)propyl)phosphinopropan]-,
[1,3-Bis(di-sulfonatophenyl)phosphinopropan]-,
[1,3-Bis(di-4-sulfonatobutyl)phosphinopropan]-,
[1,3-Bis(di-4-methylol-5-sulfonatopentyl)phosphinopropan]-,
[1,3-Bis(di-5-sulfonatopentyl)phosphinopropan]-,
[1,3-Bis(di-6-sulfonatohexyl)phosphinopropan]-,
[1,3-Bis(di(3-sulfonatocyclopentyl)propyl)phosphinopropan]-,
[1,3-Bis(di-8-sulfonatooctyl)phosphinopropan]-,
[1,3-Bis(di-3-sulfonatocyclohexyl)propyl)phosphinopropan]-,
[1,3-Bis(di-carboxyphenyl)phospinopropan]-,
[1,3-Bis(di-4-carboxybutyl)phosphinopropan]-,
[1,3-Bis(di-4-methylol-5-carboxypentyl)phosphinopropan]-,
[1,3-Bis(di-5-carboxypentyl)phosphinopropan]-,
[1,3-Bis(di-6-carboxyhexyl)phosphinopropan]-,
[1,3-Bis(di(3-carboxycyclopentyl)propyl)phosphinopropan]-,
[1,3-Bis(di-8-carboxyoctyl)phosphinopropan]- oder
[1,3-Bis(di-3-carboxycyclohexyl)propyl)phosphinopropan]-palladium(II)acetat, die in der DE-A 10107452 offenbarten Komplexe
N,N,N-Trimethyl-1-hexadecanaminium-(T-4)-[1-(diphenylphosphino-κP)-2-(hydroxy-κO)-2-(4-methylphenyl)ethylensulfonato]phenyl-nickel(II)(triphenylphosphin) oder Natrium-(T-4)-[1-(diphenylphosphino-κP)-2-(hydroxy-κO)-2-(4-methylphenyl)ethylensulfonato]phenyl-nickel(II)(triphenylphosphin),

die in der nicht vorveröffentlichten deutschen Patentanmeldung mit dem Aktenzeichen DE-A 10240577.8 offenbarten Komplexe

[2-[[[2,6-Bis(1-methylethyl)phenyl]imino-κN]methyl]-4,6-diiodophenolato-κO]methyl-nickel(II)(pyridin),
[2-[[[2,6-Bis(1-methylethyl)phenyl]imino-κN]methyl]-4,6-diiodophenolato-κO]phenyl-nickel(II)(triphenylphosphin),
[2-[[[2,6-Bis(1-methylethyl)phenyl]imino-κN]methyl]-4,6-diphenylphenolato-κO]phenyl-nickel(II)(triphenylphosphin),
[2-[[[2,6-Bis(phenyl)phenyl]imino-κN]methyl]-4,6-diphenylphenolato-κO]phenyl-nickel(II)(triphenylphosphin) oder
[2-[[[2,6-Bis(phenyl)phenyl]imino-κN]methyl]-4,6-diiodophenolato-κO]phenyl-nickel(II)(triphenylphosphin),

sowie die in der ebenfalls nicht vorveröffentlichten deutschen Patentanmeldung mit dem Aktenzeichen DE-A 10234005.6 offenbarten Komplexsysteme.

Auch die spezifischen Reaktionsbedingungen, wie Temperaturen, Drücke, Katalysatormengen etc. sind im entsprechenden Stand der Technik offenbart. Die Übergangsmetallkomplex-katalysierte Polymerisation erfolgt häufig unter Sauerstoffausschluß, beispielsweise unter Inertgasatmosphäre, wie Stickstoff oder Argon sowie unter Kohlenmonoxid- bzw. Monomerenatmosphäre. Die Polymerisationstemperatur und der Polymerisationsdruck ist stark abhängig von der Aktivität des eingesetzten Übergangsmetallkomplexes und der Reaktivität der umzusetzenden Monomeren. Dabei kann die Polymeristionstemperatur 0 bis 200 °C, oder 20 bis 150 °C sowie 40 bis 120 °C und der Polymerisationsdruck gemessen in der Gasphase 1 bis 300 bar, oder 5 bis 200 bar sowie 10 bis 100 bar (jeweils Absolutwerte) betragen.

Von Bedeutung ist ferner, dass die Übergangsmetallkomplex-katalysierte Polymerisation ethylenisch ungesättigter Monomerer A (Verfahren 2) oder B (Verfahren 1) in wässrigem Medium auch in Anwesenheit und unter Einpolymerisation von Kohlenmonoxid durchgeführt werden kann. Die hierfür geeigneten Übergangsmetallkomplexe und die Bedingungen unter denen Polymerisation in wässrigem Medium erfolgt, sind beispielsweise in DE-A 10061877 oder DE-A 10125238 offenbart.

Darüber hinaus kann die Übergangsmetallkomplex-katalysierte Polymerisation ethylenisch ungesättigter Monomerer A (Verfahren 2) oder B (Verfahren 1) in wässrigem Medium auch in Form der beispielsweise in der DE-A 19859191 offenbarten, sogenannten ringöffnenden Metathesepolymerisationen erfolgen.

Im erfindungsgemäßen Verfahren wird wenigstens ein Dispergiermittel mitverwendet, das die zur Polymerisation eingesetzten Polymerisatteilchen A und die während der Polymerisation von Monomer B gebildeten Polymerisatteilchen in der wässrigen Phase dispers verteilt hält und so die Stabilität der erzeugten wässrigen Polymerisatdispersion gewährleistet. Als Dispergiermittel kommen sowohl Schutzkolloide als auch Emulgatoren in Betracht.

Geeignete Schutzkolloide sind beispielsweise Polyvinylalkohole, Polyalkylenglykole, Alkalimetallsalze von Polyacrylsäuren und Polymethacrylsäuren, Cellulose-, Stärke-und Gelatinederivate oder Acrylsäure, Methacrylsäure, Maleinsäureanhydrid, 2-Acrylamido-2-methylpropansulfonsäure und/oder 4-Styrolsulfonsäure enthaltende Copolymerisate und deren Alkalimetallsalze aber auch N-Vinylpyrrolidon, N-Vinylcaprolactam, N-Vinylcarbazol, 1-Vinylimidazol, 2-Vinylimidazol, 2-Vinylpyridin, 4-Vinylpyridin, Acrylamid, Methacrylamid, amingruppentragende Acrylate, Methacrylate, Acrylamide und/oder Methacrylamide enthaltende Homo- und Copolymerisate. Eine ausführliche Beschreibung weiterer geeigneter Schutzkolloide findet sich in Houben-Weyl, Methoden der organischen Chemie, Band XIV/1, Makromolekulare Stoffe, Georg-Thieme-Verlag, Stuttgart, 1961, Seiten 411 bis 420.

Selbstverständlich können auch Gemische aus Emulgatoren und/oder Schutzkolloiden eingesetzt werden. Häufig werden als Dispergiermittel ausschließlich Emulgatoren eingesetzt, deren relative Molekulargewichte im Unterschied zu den Schutzkolloiden üblicherweise unter 1500 liegen. Sie können sowohl anionischer, kationischer oder nichtionischer Natur sein. Selbstverständlich müssen im Falle der Verwendung von Gemischen grenzflächenaktiver Substanzen die Einzelkomponenten miteinander verträglich sein, was im Zweifelsfall an Hand weniger Vorversuche überprüft werden kann. Im allgemeinen sind anionische Emulgatoren untereinander und mit nichtionischen Emulgatoren verträglich. Desgleichen gilt auch für kationische Emulgatoren, während anionische und kationische Emulgatoren meistens nicht miteinander verträglich sind. Eine Übersicht geeigneter Emulgatoren findet sich in Houben-Weyl, Methoden der organischen Chemie, Band XIV/1, Makromolekulare Stoffe, Georg-Thieme-Verlag, Stuttgart, 1961, Seiten 192 bis 208.

Gebräuchliche nichtionische Emulgatoren sind z.B. ethoxilierte Mono-, Di- und Tri-Alkylphenole (EO-Grad: 3 bis 50, Alkylrest: $C_4$ bis $C_{12}$) sowie ethoxilierte Fettalkohole (EO-Grad: 3 bis 80; Alkylrest: $C_8$ bis $C_{36}$). Beispiele hierfür sind die Lutensol® A-Marken ($C_{12}C_{14}$-Fettalkoholethoxilate, EO-Grad: 3 bis 8), Lutensol® AO-Marken ($C_{13}C_{15}$-Oxoalkoholethoxilate, EO-Grad: 3 bis 30), Lutensol® AT-Marken ($C_{16}C_{18}$-Fettalkoholethoxilate, EO-Grad: 11 bis 80), Lutensol® ON-Marken ($C_{10}$-Oxoalkoholethoxilate, EO-Grad: 3 bis 11) und die Lutensol® TO-Marken ($C_{13}$-Oxoalkoholethoxilate, EO-Grad: 3 bis 20) der BASF AG.

Übliche anionische Emulgatoren sind z.B. Alkalimetall- und Ammoniumsalze von Alkylsulfaten (Alkylrest: $C_8$ bis $C_{12}$), von Schwefelsäurehalbestern ethoxylierter Alkanole (EO-Grad: 4 bis 50, Alkylrest: $C_{12}$ bis $C_{18}$) und ethoxilierter Alkylphenole (EO-Grad: 3 bis 50, Alkylrest: $C_4$ bis $C_{12}$), von Alkylsulfonsäuren (Alkylrest: $C_{12}$ bis $C_{18}$) und von Alkyla-

rylsulfonsäuren (Alkylrest: $C_9$ bis $C_{18}$).

Als weitere anionische Emulgatoren haben sich ferner Verbindungen der allgemeinen Formel I

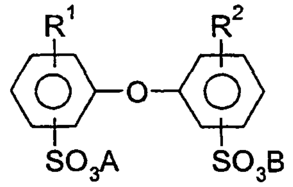

(I),

worin $R^1$ und $R^2$ H-Atome oder $C_4$- bis $C_{24}$-Alkyl bedeuten und nicht gleichzeitig H-Atome sind, und A und B Alkalimetallionen und/oder Ammoniumionen sein können, erwiesen. In der allgemeinen Formel I bedeuten $R^1$ und $R^2$ bevorzugt lineare oder verzweigte Alkylreste mit 6 bis 18 C-Atomen, insbesondere mit 6, 12 und 16 C-Atomen oder -H, wobei $R^1$ und $R^2$ nicht beide gleichzeitig H-Atome sind. A und B sind bevorzugt Natrium, Kalium oder Ammonium, wobei Natrium besonders bevorzugt ist. Besonders vorteilhaft sind Verbindungen I, in denen A und B Natrium, $R^1$ ein verzweigter Alkylrest mit 12 C-Atomen und $R^2$ ein H-Atom oder $R^1$ ist. Häufig werden technische Gemische verwendet, die einen Anteil von 50 bis 90 Gew.-% des monoalkylierten Produktes aufweisen, wie beispielsweise Dowfax® 2A1 (Marke der Dow Chemical Company). Die Verbindungen I sind allgemein bekannt, zB. aus US-A 4,269,749, und im Handel erhältlich.

Geeignete kationenaktive Emulgatoren sind in der Regel einen $C_6$- bis $C_{18}$-Alkyl-, - Aralkyl- oder einen heterocyclischen Rest aufweisende primäre, sekundäre, tertiäre oder quartäre Ammoniumsalze, Alkanolammoniumsalze, Pyridiniumsalze, Imidazoliniumsalze, Oxazoliniumsalze, Morpholiniumsalze, Thiazoliniumsalze sowie Salze von Aminoxiden, Chinoliniumsalze, Isochinoliniumsalze, Tropyliumsalze, Sulfoniumsalze und Phosphoniumsalze. Beispielhaft genannt seien Dodecylammoniumacetat oder das entsprechende Hydrochlorid, die Chloride oder Acetate der verschiedenen 2-(N,N,N-Trimethylammonium)ethylparaffinsäureester, N-Cetylpyridiniumchlorid, N-Laurylpyridiniumsulfat sowie N-Cetyl-N,N,N-trimethylammoniumbromid, N-Dodecyl-N,N,N-trimethylammoniumbromid, N-Octyl-N,N,N-trimethlyammoniumbromid, N,N-Distearyl-N,N-dimethylammoniumchlorid sowie das Gemini-Tensid N,N'-(Lauryldimethyl)ethylendiamindibromid. Zahlreiche weitere Beispiele finden sich in H. Stache, Tensid-Taschenbuch, Carl-Hanser-Verlag, München, Wien, 1981 und in Mc-Cutcheon's, Emulsifiers & Detergents, MC Publishing Company, Glen Rock, 1989.

Insbesondere geeignet sind jedoch nichtionische und/oder anionische Emulgatoren.

In der Regel werden insgesamt 0,05 bis 20 Gew.-Teile, häufig 0,1 bis 10 Gew.-Teile und oft 1 bis 7 Gew.-Teile an Dispergiermittel, jeweils bezogen auf 100 Gew.-Teile an wässrigem Medium, gebildet aus den Mengen an entionisiertem Wasser und dem wenigstens einen Dispergiermittel, verwendet.

Die Menge an entionisiertem Wasser wird dabei so bemessen, dass der Polymerisatfeststoffgehalt der erfindungsgemäß erhaltenen wässrigen Polymerisatdispersion 5 bis 75 Gew.-%, häufig 10 bis 65 Gew.-% und oft 20 bis 55 Gew.-%, jeweils bezogen auf die wässrige Polymerisatdispersion, beträgt.

Im erfindungsgemäßen Verfahren wird wenigstens eine Teilmenge des entionisierten Wassers und des wenigstens einen Dispergiermittels gemeinsam mit wenigstens einer Teilmenge der Polymerisatteilchen A im Polymerisationsgefäß vorgelegt und die gegebenenfalls verbliebenen Restmengen an Polymerisatteilchen A, entionisiertem Wasser und dem wenigstens einen Dispergiermittel im Laufe der Polymerisation des Monomeren B kontinuierlich oder diskontinuierlich zugegeben. In der Regel wird auch das Monomere B dem Polymerisationsgefäß nach Maßgabe seiner Abreaktion während der Polymerisation kontinuierlich oder diskontinuierlich zugeführt. Oft wird die Gesamtmenge der Polymerisatteilchen A im Polymerisationsgefäß vor Beginn der Polymerisation des Monomeren B vorgelegt. Gemäß Verfahren 1 wird häufig die Gesamtmenge des wenigstens einen Dispergiermittels und/oder des entionisierten Wassers im Polymerisationsgefäß vor Beginn der Polymerisation des Monomeren B vorgelegt, während gemäß Verfahren 2 häufig eine Teilmenge des wenigstens einen Dispergiermittels und/oder des entionisierten Wassers gemeinsam mit den Monomeren B in Form einer wässrigen Monomerenemulsion unter Polymerisationsbedingungen der wässrigen Dispersion der Polymerisatteilchen A zugeführt wird.

Die gewichtsmittlere Teilchengröße der Polymerisatteilchen A beträgt ≥ 1 nm und oft ≤ 1000 nm. Häufig beträgt der gewichtsmittlere Teilchendurchmesser ≥ 5 nm, ≥ 10 nm, ≥ 20 nm, ≥ 30 nm, ≥ 40 nm, ≥ 50 nm, ≥ 60 nm, ≥ 70 nm, ≥ 80 nm, ≥ 90 nm oder ≥ 100 nm und alle Werte dazwischen sowie ≤ 700 nm, ≤ 500 nm, ≤ 400 nm, ≤ 350 nm, ≤ 300 nm, ≤ 250 nm, ≤ 200 nm, ≤ 150 nm, ≤ 100 nm, ≤ 90 nm, ≤ 80 nm, ≤ 70 nm, ≤ 60 nm, ≤ 50 nm oder ≤ 40 nm und alle Werte dazwischen. Die Bestimmung der gewichtsmittleren Teilchendurchmesser ist dem Fachmann bekannt und erfolgt beispielsweise über die Methode der Analytischen Ultrazentrifuge. Unter gewichtsmittlerem Teilchendurchmesser wird in dieser Schrift der nach der Methode der Analytischen Ultrazentrifuge ermittelte gewichtsmittlere $D_{w50}$-Wert verstanden (vgl. hierzu S.E. Harding et al., Analytical Ultracentrifugation in Biochemistry and Polymer Science, Royal Society of Chemistry, Cambridge, Great Britain 1992, Chapter 10, Analysis of Polymer Dispersions with an Eight-Cell-AUC-Multiplexer: High Resolution Particle Size Distribution and Density Gradient Techniques, W. Mächtle, Seiten 147 bis 175).

Vorteilhaft kann es sein, wenn die Polymerisatteilchen A monomodal sind und eine enge Teilchengrößenverteilung aufweisen. Unter enger Teilchengrößenverteilung soll im Rahmen dieser Schrift verstanden werden, wenn das Verhältnis der nach der Methode der Analytischen Ultrazentrifuge ermittelten gewichtsmittleren Teilchendurchmesser $D_{w50}$ und zahlenmittleren Teilchendurchmesser $D_{N50}$ [$D_{w50}/D_{N50}$] ≤ 2,0, bevorzugt ≤ 1,5 und insbesondere bevorzugt ≤ 1,2 oder ≤ 1,1 ist.

Im wesentlichen abhängig von der Emulgatorkonzentration während der Polymerisation, kann das erfindungsgemäße Verfahren so gesteuert werden, dass während der Polymerisation des wenigstens einen Monomeren B neben den bereits vorhandenen Polymerisatteilchen A, praktisch keine neuen Polymerisatteilchen entstehen und sich so zweiphasige, aus Polymerisat A und Polymerisat B, erhalten durch die Polymerisation der Monomeren B, aufgebaute, Polymerisatteilchen ausbilden. Dies ist insbesondere dann der Fall, wenn die Emulgatorkonzentration während der Polymerisation so gesteuert wird, dass keine neuen Emulgatormicellen gebildet werden. Die entsprechenden Maßnahmen sind dem Fachmann bekannt. Die dabei erhaltenen, aus Polymerisat A und Polymerisat B aufgebauten Polymerisatteilchen, können unterschiedliche Teilchenmorphologien, wie beispielsweise Kern/Schale-, Himbeer- oder Halbmondstruktur etc. aufweisen. Häufig betragen die gewichtsmittleren Teilchendurchmesser der ausgebildeten zweiphasigen Polymerisatteilchen 50 bis 1000 nm, oft 70 bis 700 nm bzw. 80 bis 500 nm oder 90 bis 400 nm bzw. 100 bis 300 nm.

Wird dagegen die Emulgatorkonzentration so gesteuert, dass sich neue Emulgatormicellen ausbilden, so können sich neben den Polymerisatteilchen A auch Teilchen des Polymeren B (Polymerisatteilchen B) ausbilden. Auch die Ausbildung von wässrigen Polymerisatdispersionen, welche Polymerisatteilchen A, Polymerisatteilchen B und zweiphasige Polymerisatteilchen (aufgebaut aus Polymerisat A und B) enthalten, ist möglich. Die hierfür durchzuführenden Maßnahmen sind dem Fachmann geläufig oder können von diesem in wenigen Vorversuchen ermittelt werden.

In der Regel beträgt das Mengenverhältnis von Polymerisat A zum wenigstens einen ethylenisch ungesättigten Monomeren B 1 : 1000 bis 1000 : 1, es kann aber auch 1 : 500 bis 500 : 1, 1 : 200 bis 200 : 1, 1 : 100 bis 100 : 1, 1 : 50 bis 50 : 1, 1 : 20 bis 20 : 1 oder 1 : 10 bis 10 : 1 betragen. Bevorzugt ist ein Mengenverhältnis von 1 : 100 bis 100 : 1, 1 : 50 bis 50 : 1, 1 : 20 bis 20 : 1 bzw. 1 : 10 bis 10 : 1.

Von Bedeutung ist, dass das erfindungsgemäße Verfahren auch in Anwesenheit eines organischen Lösungsmittel durchgeführt werden kann. Dies erfolgt insbesondere dann, wenn Übergangsmetallkomplexe zur Polymerisation eingesetzt werden, die gering in wässrigem Medium löslich sind. Häufig wird in einem solchen Fall der Komplex in einem organischen Lösungsmittel aufgenommen und dem wässrigen Medium in Form einer organischen Lösung zugeführt. Liegen dabei bereits radikalisch erzeugte Polymerisatteilchen A vor (Verfahren 1), so diffundiert das Lösungsmittel und der Übergangsmetallkomplex häufig in die vorliegenden Polymerisatteilchen A, wodurch diese aufquellen können. Dabei können als organische Lösungsmittel polare protische oder polar aprotische organische Verbindungen mit einem Molekulargewicht ≤ 200 g/mol eingesetzt werden. Beispiele hierfür sind polare aprotische organische Lösungsmittel, wie die halogenierten Kohlenwasserstoffe, beispielsweise Dichlormethan, Dichlorethan oder Chloroform, aromatische Kohlenwasserstoffe, beispielsweise Benzol, Toluol, Ethylbenzol, Xylol oder Chlorbenzol oder aliphatische Ether, wie Tetrahydrofuran oder beliebige Gemische dieser Verbindungen dar. Weiterhin können Acetonitril oder Aceton als flüssige polare aprotische Lösungsmittel oder als eine Komponente unter mehreren zum Einsatz kommen. Polar protische organische Lösungsmittel sind beispielsweise $C_1$- bis $C_{10}$-Alkanole, insbesondere $C_1$- bis $C_6$-Alkanole, wie beispielsweise Methanol, Ethanol, n-Propanol, iso-Propanol, 1-Butanol, 2-Butanol, 2-Methyl-propanol-2, sowie die entsprechenden isomeren Pentanole, Hexanole oder Heptanole.

Auch ist es möglich, einen gering in wässrigem Medium löslichen Übergangsmetallkomplex in einem ebenfalls gering in wässrigem Medium löslichen organsichen Lösungsmittel aufzunehmen. Dies erfolgt insbesondere dann, wenn keine radikalisch er zeugten Polymerisatteilchen A vorliegen (Verfahren 2). In diesem Fall wird der Übergangsmetallkomplex in einem gering in wässrigem Medium löslichen organischen Lösungsmittel aufgenommen und in das wässrige Medium in Anwesenheit wenigstens eines Dispergiermittels unter Ausbildung von Lösungsmitteltröpfchen ≤ 1000 nm, ≤ 500 nm oder ≤ 300 nm eingerührt. Die hierfür erforderlichen Maßnahmen und Einrichtungen, beispielsweise Ultraschall- oder Hochdruckhomegenisatoren, wie beispielsweise Druckspalte oder andere Homogenisatoren, wie beispielsweise Zahnkranzdispergatoren etc. sind dem Fachmann bekannt (vgl. beispielsweise GB-A 2250930, US-A 5,108,654 sowie P.L. Tang, E.D. Sudol, C.A. Silebi und M.S. El-Aasser in Journal of Applied Polymer Science 1991 (43), Seiten 1059 bis 1066). Anschließend erfolgt die Herstellung der Polymeriatteilchen A durch Polymerisation entsprechender Monomerer A. Als in wässrigem Medium gering lösliche organische Lösungsmittel finden flüssige aliphatische und aromatische Kohlenwasserstoffe mit 5 bis 30 C-Atomen, wie beispielsweise n-Pentan und Isomere, Cyclopentan, n-Hexan und Isomere, Cyclohexan, n-Heptan und Isomere, n-Octan und Isomere, n-Nonan und Isomere, n-Decan und Isomere, n-Dodecan und Isomere, n-Tetradecan und Isomere, n-Hexadecan und Isomere, n-Octadecan und Isomere, Eicosan, Docosan, Benzol, Toluol, Ethylbenzol, Cumol, o-, m- oder p-Xylol, Mesitylen, sowie allgemein Kohlenwasserstoffgemische im Siedebereich von 30 bis 250 °C Verwendung. Ebenfalls einsetzbar sind Hydroxyverbindungen, wie gesättigte und ungesättigte Fettalkohole mit 10 bis 28 C-Atomen, beispielsweise n-Dodecanol, n-Tetradecanol, n-Hexadecanol und deren Isomeren oder Cetylalkohol, Ester, wie beispielsweise Fettsäureester mit 10 bis 28 C-Atomen im Säureteil und 1 bis 10 C-Atomen im Alkoholteil oder Ester aus Carbonsäuren und Fettalkoholen mit 1 bis 10 C-Atomen im Carbonsäureteil und 10 bis 28 C-Atomen im Alkoholteil. Selbstverständlich ist es auch möglich, Gemische vorgenannter Lösungsmittel einzusetzen.

Die Menge des organischen Lösungsmittels, bezogen auf das wässrige Medium, bestehend aus Wasser und Dispergiermittel, beträgt oft ≤ 20 Gew.-%, ≤ 10 Gew.-%, ≤ 5 Gew.-%, oder ≤ 3 Gew.-% oder ≤ 1 Gew.-%. Häufig erfolgt die Polymerisationsreaktion ohne Zusatz von organischem Lösungsmittel.

Darüber kann es vorteilhaft sein, dass während der Polymerisation von Monomer A und/oder Monomer B in wässrigem Medium wenigstens eine wasserlösliche makromolekulare Wirtsverbindung mit einem hydrophoben Hohlraum und einer hydrophile Hülle anwesend ist. Häufig erfolgt lediglich die Polymerisation von Monomer B in Anwesenheit einer entsprechenden wasserlöslichen makromolekularen Wirtsverbindung. Unter einer wasserlöslichen makromolekularen Wirtsverbindung sollen in dieser Schrift solche Wirtsverbindungen verstanden werden, welche bei 25 °C und 1 bar (absolut) eine Löslichkeit von ≥ 10 g pro Liter Wasser aufweisen. Günstig ist es, wenn die Löslichkeit der makromolekularen Wirtsverbindungen unter den vorgenannten Bedingungen ≥ 25 g/l, ≥ 50 g/l, ≥ 100 g/l, ≥ 200 g/l oder ≥ 300 g/l beträgt.

Als wasserlösliche makromolekulare Wirtsverbidungen sind vorteilhaft beispielsweise Calixarene, cyclische Oligosaccharide, nichtcyclische Oligosaccharide und/oder deren Derivate einsetzbar.

Erfindungsgemäß einsetzbare Calixarene sind in der US-A 4,699,966, der internationalen Patentanmeldung WO 89/08092 sowie den japanischen Patentschriften 1988/197544 und 1989/007837 beschrieben.

Als cyclische Oligosaccharide können beispielsweise die von Takai et al. im Journal of Organic Chemistry, 1994, 59 (11), Seiten 2967 bis 2975, beschriebenen Cycloinulohexose und -heptose aber auch Cyclodextrine und/oder deren Derivate eingesetzt werden.

Besonders geeignete Cyclodextrine sind α-Cyclodextrin, β-Cyclodextrin oder γ-Cyclodextrin sowie deren Methyl-, Triacetyl-, Hydroxypropyl- oder Hydroxyethylderivate. Insbesondere bevorzugt sind die im Handel erhältlichen underivatisierten Verbindungen, Cavamax® W6, Cavamax® W7 oder Cavamax® W8, die teilmethylierten Verbindungen Cavasol® W6M, Cavasol® W7M oder Cavasol® W8M sowie die teilhydroxypropylierten Verbindungen Cavasol® W6HP, Cavasol® W7HP oder Cavasol® W8HP (Marken der Wacker-Chemie GmbH).

Als nichtcyclische Oligosaccharide finden beispielsweise Stärken und/oder deren Abbauprodukte Verwendung.

Bei den in Wasser löslichen Stärken oder Stärkeabbauprodukten handelt es sich häufig um native Stärken, die durch Kochen mit Wasser wasserlöslich gemacht worden sind, oder um Stärkeabbauprodukte, die durch Hydrolyse, insbesondere durch sauer katalysierte Hydrolyse, enzymatisch katalysierte Hydrolyse oder Oxidation aus den nativen Stärken gewonnen werden. Derartige Abbauprodukte werden auch als Dextrine, Röstdextrine oder verzuckerte Stärken bezeichnet. Ihre Herstellung aus nativen Stärken ist dem Fachmann bekannt und beispielsweise in G. Tegge, Stärke und Stärkederivate, EAS Verlag, Hamburg 1984, Seiten 173ff. und Seiten 220ff. sowie in der EP-A 0441 197 beschrieben. Als native Stärken können praktisch alle Stärken pflanzlicher Herkunft, beispielsweise Stärken aus Mais, Weizen, Kartoffeln, Tapioka, Reis, Sago und Sorghumhirse eingesetzt werden.

Erfindungsgemäß finden auch chemisch modifizierte Stärken oder Stärkeabbauprodukte Verwendung. Unter chemisch modifizierten Stärken oder Stärkeabbauprodukten sind solche Stärken oder Stärkeabbauprodukte zu verstehen, in denen die OH-Gruppen wenigstens teilweise in derivatisierter, z.B. in veretherter oder verestert Form vorliegen. Die chemische Modifizierung kann sowohl an den nativen Stärken als auch an den Abbauprodukten vorgenommen werden. Ebenso ist es möglich, die chemisch modifizierten Stärken im nachhinein in ihre chemisch modifizierten Abbauprodukte zu überführen.

Die Veresterung von Stärke bzw. Stärkeabbauprodukten kann sowohl mit anorganischen als auch organischen Säuren, deren Anhydriden oder deren Chloriden erfolgen. Übliche veresterte Stärken sind phosphatierte und/oder acetylierte Stärken bzw. Stärkeabbauprodukte. Eine Veretherung der OH-Gruppen kann beispielsweise mit organischen Halogenverbindungen, Epoxiden oder Sulfaten in wässriger alkalischer Lösung erfolgen. Beispiele für geeignete Ether sind Alkylether, Hydroxyalkylether, Carboxyalkylether, Allylether und kationisch modifizierte Ether, z.B. (Trisalkylammonium)alkylether und (Trisalkylammonium)hydroxyalkylether. Je nach Art der chemischen Modifizierung können die Stärken bzw. die Stärkeabbauprodukte neutral, kationisch, anionisch oder amphiphil sein. Die Herstellung modifizierter Stärken und Stärkeabbauprodukte ist dem Fachmann bekann (vgl. Ullmann's Encyclopedia of Industrial Chemistry, $5^{th}$ ed., Bd. 25, Seiten 12 bis 21 und dort zitierte Literatur).

In einer Ausführungsform der vorliegenden Erfindung werden wasserlösliche Stärkeabbauprodukte und ihre chemisch modifizierten Derivate, die durch Hydrolyse, Oxidation oder enzymatischen Abbau von nativen Stärken oder chemisch modifizierten Stärkederivaten erhältlich sind, verwendet. Derartige Stärkeabbauprodukte werden auch als verzuckerte Stärken bezeichnet (vgl. G. Tegge, Stärke und Stärkederivate, EAS Verlag, Hamburg 1984, Seiten 220ff.). Verzuckerte Stärken und ihre Derivate sind als solche im Handel erhältlich (z.B. C*Pur®-Produkte 01906, 01908, 01910, 01912, 01915, 01921, 01924, 01932 oder 01934 der Cerestar Deutschland GmbH, Krefeld) oder können durch Abbau handelsüblicher Stärken nach bekannten Methoden, beispielsweise durch oxidative Hydrolyse mit Peroxiden oder enzymatische Hydrolyse aus den Stärken oder chemisch modifizierten Stärken hergestellt werden. Günstig sind hydrolytisch zugängliche Stärkeabbauprodukte, die chemisch nicht weiter modifiziert sind.

Innerhalb vorgenannter Ausführungsform werden Stärkeabbauprodukte bzw. chemisch modifizierte Stärkeabbauprodukte mit einem gewichtsmittleren Molekulargewicht $M_w$ im Bereich von 1000 bis 30000 Dalton und ganz bevorzugt im Bereich von 3000 bis 10000 Dalton verwendet. Derartige Stärken sind bei 25 °C und 1 bar in Wasser vollständig löslich, wobei die Löslichkeitsgrenze in der Regel oberhalb 50 Gew.-% liegt, was sich für die Herstellung der erfindungsgemäßen Copolymerisate in wässrigem Medium als besonders günstig erweist. Vorteilhaft können insbesondere C*Pur® 01906 ($M_w$ ca. 20000) und C*Pur® 01934 ($M_w$ ca. 3000) eingesetzt werden.

Angaben über das Molekulargewicht der vorgenannter Stärkeabbauprodukte bzw. chemisch modifizierte Stärkeabbauprodukte beruhen auf Bestimmungen mittels Gelpermeationschromatographie unter folgenden Bedingungen:

| | |
|---|---|
| Säulen: | 3 Stück 7,5 x 600 mm Stahl gefüllt mit TSK-Gel G 2000 PW und G 4000 PW. Porenweite 5 μm. |
| Eluent: | entionisiertes Wasser |
| Temperatur: | 20 bis 25 °C (Raumtemperatur) |
| Detektion: | Differentialrefraktometer (z.B. ERC 7511) |
| Fluss: | 0,8 ml/min. Pumpe: (z.B. ERC 64.00) |
| Injektionsventil: | 20 μl Ventil: (z.B. VICI 6-Wege-Ventil) |
| Auswertung: | Bruker Chromstar GPC-Software |
| Eichung: | Die Eichung erfolgte im niedermolekularen Bereich mit Glucose, Raffinose, Maltose und Maltopentose. Für den höhermolekularen Bereich wurden Pullulan-Standards mit einer Polydispersität < 1,2 verwendet. |

Die im vorliegenden Verfahren eingesetzte Menge an wasserlöslicher makromolekularer Wirtsverbindung beträgt in der Regel 0,1 bis 50 Gew.-Teile, oft 0,2 bis 20 Gew.-Teile und häufig 0,5 bis 10 Gew.-Teile, jeweils bezogen auf 100 Gew.-Teile Monomer A und/oder Monomer B.

Durch gezielte Variation der Monomeren A und/oder B ist es erfindungsgemäß möglich, wässrige Polymerisatdispersionen herzustellen, deren Polymerisate eine Glasübergangstemperatur bzw. einen Schmelzpunkt im Bereich von -60 bis 270 °C aufweisen.

Mit der Glasübergangstemperatur $T_g$, ist der Grenzwert der Glasübergangstemperatur gemeint, dem diese gemäß G. Kanig (Kolloid-Zeitschrift & Zeitschrift für Polymere, Bd. 190, S. 1, Gleichung 1) mit zunehmendem Molekulargewicht zustrebt. Die Glasübergangstemperatur bzw. der Schmelzpunkt wird nach dem DSC-Verfahren ermittelt (Differential Scanning Calorimetry, 20 K/min, midpoint-Messung, DIN 53765).

Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/T_g = x^1/T_g^1 + x^2/T_g^2 + \dots x^n/T_g^n,$$

wobei $x^1, x^2, \dots x^n$ die Massenbrüche der Monomeren 1, 2, .... n und $T_g^1, T_g^2, \dots T_g^n$ die Glasübergangstemperaturen der jeweils nur aus einem der Monomeren 1, 2, .... n aufgebauten Polymerisaten in Grad Kelvin bedeuten. Die $T_g$-Werte für die Homopolymerisate der meisten Monomeren sind bekannt und z.B. in Ullmann's Ecyclopedia of Industrial Chemistry, Bd. 5, Vol. A21, Seite 169, VCH Weinheim, 1992, aufgeführt; weitere Quellen für Glasübergangstemperaturen von Homopolymerisaten bilden z.B. J. Brandrup, E.H. Immergut, Polymer Handbook, 1st Ed., J. Wiley, New York 1966, 2nd Ed. J.Wiley, New York 1975, und 3rd Ed. J. Wiley, New York 1989).

Die nach dem erfindungsgemäßen Verfahren zugänglichen wässrigen Polymerisatdispersionen weisen oft Polymerisate auf, deren Mindestfilmbildetemperatur MFT ≤ 80 °C häufig ≤ 50 °C oder ≤ 30 °C beträgt. Da die MFT unterhalb 0 °C nicht mehr messbar ist, kann die untere Grenze der MFT nur durch die $T_g$-Werte angegeben werden. Die Bestimmung der MFT erfolgt nach DIN 53787.

Häufig werden bei den erhaltenen wässrigen Polymerisatdispersionen die Restgehalte an nicht umgesetzten Monomeren durch dem Fachmann ebenfalls bekannte chemische und/oder physikalische Methoden [siehe beispielsweise EP-A 771328, DE-A 19624299, DE-A 19621027, DE-A 19741184, DE-A 19741187, DE-A 19805122, DE-A 19828183, DE-A 19839199, DE-A 19840586 und 19847115] herabgesetzt.

Die erfindungsgemäß anfallenden wässrigen Polymerisatdispersionen sind häufig über mehrere Wochen oder Monate stabil und zeigen während dieser Zeit in der Regel praktisch keinerlei Phasenseparierung, Abscheidungen oder Koagulatbildung. Sie eignen sich vorzüglich insbesondere als Bindemittel bei der Herstellung von Klebstoffen, wie

beispielsweise Haftklebstoffen, Bauklebstoffen oder Industrieklebstoffen, Dichtmassen, Kunststoffputzen und Anstrichmitteln, wie beispielsweise für die Papierstreicherei, Dispersionsfarben oder für Druckfarben und Drucklacke zum Bedrucken von Kunststofffolien sowie zur Herstellung von Vliesstoffen oder zur Herstellung von Schutzschichten und Wasserdampfsperren, wie beispielsweise bei der Grundierung. Ebenfalls können diese wässrigen Polymerisatdispersionen zur Modifizierung von mineralischen Bindemitteln oder anderen Kunststoffen eingesetzt werden.

Auch sei festgehalten, dass die erfindungsgemäß erhältlichen wässrigen Polymerisatdispersionen in einfacher Weise zu redispergierbaren Polymerisatpulvern trockenbar sind (z.B. Gefriertrocknung oder Sprühtrocknung). Dies gilt insbesondere dann, wenn die Glasübergangstemperatur des in der wässrigen Polymerisatdispersion mengenmäßig überwiegenden Polymerisats A oder B in der Regel ≥ 50 °C, oft ≥ 60 °C oder ≥ 70 °C, häufig ≥ 80 °C oder ≥ 90 °C bzw. ≥ 100 °C beträgt. Die Polymerisatpulver eignen sich ebenfalls als Bindemittel in Klebstoffen, Dichtmassen, Kunststoffputzen und Anstrichmitteln, sowie zur Herstellung von Vliesstoffen oder zur Modifizierung von mineralischen Bindemitteln, wie beispielsweise Mörtel oder Zement, oder als modifizierende Additive in anderen Kunststoffen.

Auch ist es möglich, die erfindungsgemäß zugänglichen wässrigen Polymerisatdispersionen einem dem Fachmann geläufigen Koagulationsschritt zu unterziehen, wodurch sich das Polymerisat koagulieren und durch einfache Filtration vom wässrigem Medium abtrennen lässt. Nachfolgende Trocknung liefert ein Polymerisat, welches insbesondere zur Modifizierung anderer Kunststoffe sowie zu Herstellung von Formteilen, insbesondere durch Spritzguss- oder Extrusionsverfahren sowie zum Beschichten von Oberflächen eingesetzt werden kann.

Das erfindungsgemäße Verfahren eröffnet einen ökonomischen, ökologischen, präparativ einfachen und sicherheitstechnisch weitgehend unbedenklichen Zugang zu neuartigen wässrigen Polymerisatsystemen, welches die Vorteile der radikalisch initiierten Polymerisation und der Übergangsmetallkomplex-katalysierten Polymerisation in sich vereinigt.

Die vorliegende Erfindung wird anhand der nachfolgenden Beispiele näher erläutert.

Beispiele

Beispiel 1

Herstellung von [1,3-Bis(di(n-hydroxypentyl)phosphino)propan]-palladium(II)diacetat (gemäß Lindner et al., J. Organomet. Chem. 2000, 602, Seiten 173ff.)

642 mg (1,25 mmol) 1,3-Bis(di(n-hydroxypentyl)phosphino)propan wurden bei 20 bis 25 °C (Raumtemperatur) unter Argonatmosphäre in ein Schlenkrohr eingewogen und in 20 ml wasserfreiem, entgastem Dichlormethan (Aldrich GmbH) gelöst. In einem zweiten Schlenkrohr wurden 286 mg (1,27 mmol) Palladium(II)acetat (99 Gew.-%, Aldrich GmbH) in 20 ml wasserfreiem, entgastem Dichlormethan bei Raumtemperatur unter Rühren gelöst. Die 1,3-Bis(di(n-hydroxypentyl)phosphino)propan-Lösung wurde bei Raumtemperatur und unter Argonatmosphäre innerhalb von 10 Minuten zur Palladiumacetatlösung zugegeben, danach 30 Minuten gerührt und anschließend das Lösemittel im Vakuum (ca. 1 mbar absolut) entfernt. Man erhielt 925 mg (Ausbeute: 99 %) an [1,3-Bis(di(n-hydroxypentyl)phosphino)propan]-palladium(II)diacetat in Form eines gelb-braunen Öls.

Beispiel 2

a) Übergangsmetallkomplex-katalysierte Polymerisation von 1-Buten/Kohlenmonoxid in wässrigem Medium

In 2000 ml entionisiertem Wasser wurde nacheinander bei Raumtemperatur 200 mg [1,3-Bis(di(n-hydroxypentyl)phosphino)propan]-palladium(II)diacetat aus Beispiel 1, 25,6 g einer 1 gew.-%igen wässrigen Lösung von Tetrafluoroborsäure (Aldrich GmbH) und 10 g Natriumdodecylsulfat (99 Gew.-%, Aldrich GmbH) unter Rühren und Stickstoffatmosphäre gelöst. Die Mischung wurde in einen 9 1-Stahlautoklaven mit mechanischem Rührer und elektrisch beheiztem Mantel überführt. Anschließend leitete man bei Raumtemperatur 1600 g 1-Buten in den Stahlautoklaven. Danach presste man unter Rühren bei Raumtemperatur solange Kohlenmonoxid in den Autoklaven ein, bis ein Druck von 50 bar erreicht war. Unter Rühren wurde der Autoklaveninhalt auf 60 °C aufgeheizt und der Kohlenmonoxiddruck 60 bar einreguliert und unter Aufrechterhaltung dieses konstant gehaltenen Kohlenmonoxiddrucks 10 Stunden gerührt. Nach Abkühlung des Autoklaveninhalts auf eine Temperatur von ca. 40 °C und Entspannen auf 4 bar (absolut) wurde der Autoklaveninhalt in einen 5 l-Glasbehälter mit mechanischem Rührer, Gaseinleitungs- und Abgasrohr überführt und dabei auf Atmosphärendruck entspannt. Anschließend entfernte man nicht abreagiertes 1-Buten bzw. Kohlenmonoxid durch einstündiges Hindurchleiten von Stickstoff bei ca. 40°C. Man erhielt so ein 2580 g einer wässrigen Polymerisatdispersion. Der Feststoffgehalt der Polymerisatdispersion wurde nach Filtration über ein 60 μm-Filter zu 23 Gew.-%, bezogen auf die nach der Filtration erhaltene wässrige Polymerisatdispersion, bestimmt. Der Gehalt des auf dem Sieb verbleibenden Koagulats wurde zu 0,7 Gew.-%, bezogen auf die eingesetzte wässrige Polymerisatdispersion, bestimmt. Die gewichtsmittlere

Teilchengröße $D_{w50}$ der erhaltenen Polymerisatteilchen betrug 112 nm. Die erhaltene wässrige Polymerisatdispersion war stabil und zeigte innerhalb von 10 Wochen keinerlei Phasenseparierung oder Sedimentation.

Der Koagulatgehalt wurde generell bestimmt, indem man die erhaltene wässrige Polymerisatdispersion über ein 60 μm-Filtergewebe filtrierte. Das Filtergewebe wurde anschließend mit 100 ml entionisiertem Wasser gespült und in einem Trockenschrank bei 100 °C und Atmosphärendruck bis zur Gewichtskonstanz getrocknet. Aus der Gewichtsdifferenz des Filtergewebes vor der Filtration und dem Filtergewebe nach der Filtration und Trocknung wurde der Koagulatgehalt der wässrigen Polymerisatdispersion , jeweils bezogen auf die wässrige Polymerisatdispersion vor der Filtration, bestimmt.

Der Feststoffgehalt wurde generell bestimmt, indem ca. 1 g der nach der Filtration erhaltenen wässrigen Polymerisatdispersion in einem offenen Aluminiumtiegel mit einem Innendurchmesser von ca. 3 cm in einem Trockenschrank bei 100 °C und Atmosphärendruck bis zur Gewichtskonstanz getrocknet wurde. Zur Bestimmung des Feststoffgehalts wurden jeweils zwei separate Messungen durchgeführt und der entsprechende Mittelwert gebildet. Bezogen wird der Feststoffgehalt jeweils auf die wässrige Polymerisatdispersion nach der Filtration.

Die Teilchengrößen wurden entweder nach der Methode der Analytischen Ultrazentrifuge bestimmt (W. Mächtle, Makromolekulare Chemie 1984 (185), Seiten 1025 bis 1039) oder mittels dynamischer Lichtstreuung bestimmt (Autosizer IIC der Fa. Malvern Instruments, England,) wobei der mittlere Durchmesser der Kumulantenauswertung [cumulant z-average] der gemessenen Autokorrelationsfunktion gemäß ISO-Norm 13321 angegeben ist.

10 ml der erhaltenen wässrigen Polymerisatdispersion wurden in eine Polyethylenschale mit einem Innendurchmesser von ca. 5 cm gegeben und 24 Stunden bei 23 °C und 50 % relativer Luftfeuchtigkeit getrocknet. Es wurde ein spröder, rissiger Polymerisatfilm erhalten. Die Glasübergangstemperatur des Polymerisats wurde zu 9 °C bestimmt. Darüber hinaus wies das Polymerisat noch einen breiten Schmelzpunktsbereich von 80 bis 120 °C auf. Die Bestimmung der Glasübergangstemperatur bzw. des Schmelzpunktes (Schmelzbereichs) erfolgte generell gemäß DIN 53765 mittels eines DSC 820-Geräts, Serie TA 8000 der Fa. Mettler-Toledo.

Das Molekulargewicht des getrockneten Polymerisatfilms wurde per Gelpermeationschromatographie (GPC) ermittelt (Hexafluorisopropanol mit 0,05 Gew.-% Trifluoressigsäure-Kaliumsalz; die Kalibrierung erfolgte mit eng verteilten Polymethacrylat-Standards der Fa. PSS mit Molekulargewichten von M = 505 bis M = 2740000; außerhalb dieses Intervalls liegende Elutionsbereiche wurden durch Extrapolation abgeschätzt; die Detektion erfolgte mit einem Differentialrefraktometer HP 1100 der Fa. Hewlett Packard). Dabei betrug das zahlengemittelte Molekulargewicht $M_n$ 9000 g/mol und das massengemittelte Molekulargewicht $M_w$ 21000 g/mol.

b) Radikalische Emulsionspolymerisation in Gegenwart der Polyketondispersion a)

In einen Glasreaktor, der in einem Heizbad thermostatisiert ist und mit einem mechanischen Rührer, Rückflußkühler und zwei gerührten Zulaufgefäßen ausgestattet ist, wurden 265,5 g der wässrigen Polyketondispersion a) unter Stickstoffatmosphäre vorgelegt. Das Zulaufgefäß 1 wurde mit einer Emulsion, bestehend aus 119 g entionisiertem Wasser, 4,8 g einer 15 gew.-%igen wässrigen Lösung von n-Dodecylbenzolsulfonat-Natriumsalz, 119 g n-Butylacrylat und 1,2 g Acrylsäure befüllt. Das Zulaufgefäß 2 wurde mit einer Lösung, bestehend aus 0,84 g Natriumperoxodisulfat und 40 g entionisiertem Wasser, befüllt.

Der Inhalt der Vorlage wurde unter Rühren und Stickstoffatmosphäre auf 80 °C aufgeheizt, mit 4 g von Zulauf 2 versetzt und 10 Minuten gerührt. Danach wurde Zulauf 1 kontinuierlich innerhalb einer Stunde und der Rest des Zulaufs 2 kontinuierlich innerhalb von eineinhalb Stunden bei vorgenannter Temperatur zugegeben und anschließend auf Raumtemperatur abgekühlt.

Die erhaltene wässrige Polymerisatdispersion wies einen Koagulatgehalt von 0,5 Gew.-% auf und der Feststoffgehalt wurde zu 33 Gew.-% bestimmt. Die gewichtsmittlere Teilchengröße $D_{w50}$ der erhaltenen Polymerisatteilchen betrug 188 nm.

10 ml der erhaltenen wässrigen Polymerisatdispersion wurden in eine Polyethylenschale mit einem Innendurchmesser von ca. 5 cm gegeben und 24 Stunden bei 23 °C und 50 % relativer Luftfeuchtigkeit getrocknet. Es wurde ein geschlossener, flexibler sowie transparenter Polymerisatfilm erhalten. Die Glasübergangstemperatur des Polymerisats wurde zu 40 °C bestimmt. Darüber hinaus wies das Polymerisat noch einen breiten Schmelzpunktsbereich von ca. 80 bis 120 °C auf.

Beispiel 3

Eine durch radikalische Emulsionspolymerisation hergestellte Polystyroldispersion mit einem gewichtsmittleren Teilchendurchmesser $D_{w50}$ von 30 nm und einem Polydispersitätsindex von < 1,5 wurde mit entionisiertem Wasser auf einen Feststoffgehalt von 10 Gew.-% verdünnt.

100 ml dieser wässrigen Polystyroldispersion wurden in einem Schlenkrohr mit 10 ml einer 10 gew.-%igen Lösung von [1,3-Bis(di(n-hexyl)phosphino)propan]-palladium(II)diacetat (Herstellung analog Beispiel 1) in Styrol versetzt

und 24 Stunden bei Raumtemperatur unter Stickstoffatmosphäre gerührt. Danach waren die Polystyrolteilchen mit styrolischer Katalysatorlösung gequollen und keine separaten Styroltröpfchen mehr erkennbar (Lichtmikroskop; Vergrößerung: 40-fach).

10 g der vorgenannten "gequollenen" Polystyroldispersion wurden unter Stickstoffatmosphäre in 2000 g entionisiertes Wasser eingerührt und nacheinander bei Raumtemperatur mit 12 g einer 1 gew.-%igen Lösung von Tetrafluoroborsäure in entionisierem Wasser, 10 g Natriumdodecylsulfat (Fa. Aldrich GmbH) und 20 g Cyclodextrin Cavasol® W7 M (Fa. Wacker-Chemie GmbH) versetzt. Die wässrige Mischung wurde in einen 9 1-Stahlautoklaven mit mechnischem Rührer und elektrisch beheiztem Mantel überführt. Danach dosierte man dem Autoklaven ebenfalls bei Raumtemperatur 100 g 1-Hexen zu, leitete bis zu einem Druck von 50 bar Kohlenmonoxid ein und heizte den Autoklaveninhalt auf 60 °C auf. Dabei regulierte man den Kohlenmonoxiddruck auf konstant 60 bar ein. Unter Rühren und konstantem Kohlenmonoxiddruck wurden während 10 Stunden 900 g 1-Hexen über eine HPLC-Pumpe zudosiert. Anschließend ließ man das Reaktionsgemisch noch 2 Stunden bei dieser Temperatur, entspannte den Autoklaven auf 4 bar und überführte den Autoklaveninhalt in einen 5 I-Glasbehälter, ausgerüstet mit einem mechanischen Rührer sowie einem Gaseinleitungs- und Abgasrohr. Durch einstündiges Hindurchleiten von gasförmigen Stickstoff durch die auf 70 °C aufgeheizte wässrige Dispersion wurde nicht abreagiertes 1-Hexen entfernt. Man erhielt so 2830 g einer wässrigen Polymerisatdispersion. Die erhaltene wässrige Polymerisatdispersion wies einen Koagulatgehalt von 0,1 Gew.-% auf. Der Feststoffgehalt wurde zu 28 Gew.-% bestimmt. Die mittels dynamischer Lichtstreuung ermittelte mittlere Teilchengröße der erhaltenen Polymerisatteilchen betrug 260 nm.

10 ml der erhaltenen wässrigen Polymerisatdispersion wurden in eine Polyethylenschale mit einem Innendurchmesser von ca. 5 cm gegeben und 24 Stunden bei 23 °C und 50 % relativer Luftfeuchtigkeit getrocknet. Es wurde ein spröder, geschlossener Film erhalten. Die Glasübergangstemperatur des Polymerisats wurde zu -10 °C bestimmt.

Vom erhaltenen Polymerisatfilm wurde mittels der Gel-Permeations-Chromatographie das Molekulargewicht bestimmt. Dabei betrug das zahlengemittelte Molekulargewicht $M_n$ 8600 g/mol und das massengemittelte Molekulargewicht $M_w$ 20000 g/mol.

Beispiel 4

a) Übergangsmetallkomplex-katalysierte Herstellung einer Polyethylendispersion

19 mg Tetrachlorobenzochinon (Fa. Aldrich GmbH) wurden unter Argonatmosphäre in einem Schlenkrohr in einem wasserfreiem und entgastem Gemisch aus 4 g Toluol, 0,2 g Hexadecan und 1 ml Methanol gelöst, der Lösung danach unter Rühren bei Raumtemperatur 18 mg Triphenylphosphan und 20 mg Bis(cydooctadien)Nickel(0) (Fa. Strem Chemicals Inc.) zugesetzt und die erhaltene Lösung 30 Minuten gerührt. Dieser Lösung setzte man anschließend unter Rühren 95 ml einer 1 gew.-%igen Lösung von Natriumdodecylsulfat in entionisiertem Wasser zu, wobei sich eine Öl-in-Wasser Makroemulsion ausbildete. Mit Hilfe eines Microfluidizers (Typ 120 der Fa. Microfluidics Corp.) wurde daraus durch Hochdruckhomogenisierung bei 750 bar eine sogenannte Miniemulsion hergestellt. Die mittlere Tröpfchengröße der Emulsionströpfchen wurde mittels quasielastischer dynamischer Lichtstreuung mit einem Coulter N4 Plus Particle Analyzer der Fa. Coulter Scientific Instruments zu 150 nm bestimmt. Die erhaltene wässrige Miniemulsion wurde unter Argonatmosphäre in einen 300 ml Autoklaven, ausgestattet mit mechanischem Rührer, elektrischer Heizung sowie zwei getrennten Zuläufen, überführt. Anschließend leitete man unter Rühren Ethen bis zu Druck von 50 bar ein und heizte das Reaktionsgemisch unter konstantem Ethendruck auf 50 °C auf und zwei Stunden unter Rühren bei dieser Temperatur belassen. Anschließend wurde eine 5 ml Probe über ein Steigrohr entnommen. Der Feststoffgehalt der erhaltenen Polymerisatdispersion wurde zu 19 Gew.-% bestimmt.

Die erhaltene wässrige Polymerisatdispersion wurde in einer Polyethylenschale mit einem Innendurchmesser von ca. 5 cm gegeben und 24 Stunden bei 23 °C und 50 % relativer Luftfeuchtigkeit getrocknet. Es wurde ein farbloser, rissiger Polymerisatfilm ohne feststellbare Glasübergangstemperatur erhalten. Jedoch wies das Polymerisat einen Schmelzpunkt von ca. 126°C auf.

Vom erhaltenen Polymerisatfilm wurde das Molekulargewicht mittels GPC bestimmt (o-Xylol; die Kalibrierung erfolgte mit eng verteilten Polystyrol der Fa. PSS mit Molekulargewichten von M = 400 bis M = 2,5 Mio g/mol; außerhalb dieses Intervalls liegende Elutionsbereiche wurden durch Extrapolation abgeschätzt; die Detektion erfolgte mit einem Differentialrefraktometer HP 1100 der Fa. Hewlett Packard). Dabei betrug das zahlengemittelte Molekulargewicht $M_n$ 6000 g/mol und das massengemittelte Molekulargewicht $M_w$ 16000 g/mol.

b) Radikalische Emulsionspolymerisation in Gegenwart der Polyethylendispersion a)

Die Temperatur des unter a) erhaltenen Autoklaveninhalts wurde unter Beibehaltung des Ethendrucks von 50 auf 85 °C erhöht. Danach dosierte man unter Rühren 5 g eines Zulaufs 1, bestehend aus einer Emulsion von 60 g Vinylacetat, 40 g entionisiertem Wasser, 0,2 g Mowiol 4088 (Polyvinylalkohol der Fa. Clariant) und 0,5 g Natriumdodecylsulfat (Fa. Aldrich GmbH) in den Autoklaven. Nach 5 Minuten dosierte man gleichzeitig beginnend über zwei separate Zuläufe den Rest des Zulaufs 1 und die Gesamtmenge des Zulaufs 2, bestehend aus einer Lösung von 1 g Natriumperoxodisulfat in 5 g entionisiertem Wasser, während 1,5 Stunden zu. Nach einer Nachreaktionszeit von einer halben Stunde wurde der Autoklaveninhalt auf Raumtemperatur abgekühlt und auf Atmosphärendruck entspannt.

Die wässrige Polymerisatdispersion wurde über ein 60 µm-Filtergewebe filtriert, wobei lediglich Spuren von Koagulat gefunden wurde. Der Feststoffgehalt der erhaltenen wässrigen Polymerisatdispersion betrug 38 Gew.-% und die mittels dynamischer Lichtstreuung ermittelte mittlere Teilchengröße der Polymerisatpartikel betrug 210 nm.

10 ml der erhaltenen wässrigen Polymerisatdispersion wurden in eine Polyethylenschale mit einem Innendurchmesser von ca. 5 cm gegeben und 24 Stunden bei 23 °C und 50 % relativer Luftfeuchtigkeit getrocknet. Es wurde ein klarer flexibler Film erhalten. Die Glasübergangstemperatur des Polymerisats wurde zu 5 °C bestimmt. Darüber hinaus wies das Polymerisat noch einen Schmelzpunkt von ca. 120 °C auf.

Beispiel 5

a) Übergangsmetallkomplex-katalysierte Herstellung einer Polybutadiendispersion

In einem Schlenkrohr mit magnetischem Rührer wurden unter Argonatmosphäre 82 mg Cobalt(II)octanoat (Fa. Strem Chemicals Inc.) eingewogen und anschließend das Schlenkrohr mit einem Kryostaten auf- 10 °C gekühlt. Danach wurden dem Schlenkrohr ca. 300 mg 1,3-Butadien (kurz Butadien) einkondensiert, anschließend 470 mg einer 30 gew.-%igen Lösung von Triisobutylaluminium in Toluol (Fa. Aldrich GmbH) zugegeben und das erhaltene Gemisch 10 Minuten bei -10 °C gerührt. Die Mischung wurde in einen mit Stickstoff inertisierten, auf 50 °C temperierten Stahlautoklaven mit 300 ml Volumen überführt, in den zuvor 100 ml entionisiertes und entgastes Wasser, 1 g Natriumdodecylsulfat, 18 mg Kohlenstoffdisulfid und 30 g Butadien gefüllt wurden. Diese Reaktionsmischung ließ man 2 Stunden bei 50 °C unter Rühren abreagieren. Anschließend wurde eine über ein Steigrohr eine 5 ml-Probe entnommen.

Der Feststoffgehalt der erhaltenen wässrigen Polymerisatdispersion betrug 18 Gew.-% und die mittels dynamischer Lichtstreuung ermittelte mittlere Teilchengröße der Polymerisatpartikel betrug 230 nm.

1 ml der erhaltenen wässrigen Polymerisatdispersion wurden in eine Polyethylenschale mit einem Innendurchmesser von ca. 5 cm gegeben und 24 Stunden bei 23 °C und 50 % relativer Luftfeuchtigkeit getrocknet. Es wurde ein weißes Pulver erhalten. Die Glasübergangstemperatur des Polymerisats wurde zu -17 °C bestimmt. Darüber hinaus wies das Polymerisat noch einen Schmelzpunkt von ca. 175 °C auf.

b) Radikalische Emulsionspolymerisation in Gegenwart der Polybutadiendispersion a)

Der aus a) erhaltene Autoklaveninhalt wurde unter Rühren auf 90 °C aufgeheizt, diesem dann 1 g eines Zulaufs 3 zudosiert und die Mischung 10 Minuten bei vorgenannter Reaktionstemperatur gerührt. Danach wurden zeitgleich beginnend die Gesamtmengen an Zulauf 1 und an Zulauf 2 innerhalb von 2 Stunden und die Restmenge an Zulauf 3 innerhalb von 2,5 Stunden kontinuierlich zudosiert. Nach beendeter Zudosierung von Zulauf 3 wurde bei Reaktionstemperatur noch 15 Minuten nachgerührt, dann auf ca. 30 bis 35 °C abgekühlt und der Reaktorinhalt auf Atmosphärendruck entspannt. Zur Abreicherung nicht umgesetzten Butadiens leitete man anschließend noch für ca. eine Stunde gasförmigen Stickstoff durch die erhaltenen wässrige Polymerisatdispersion.

| | |
|---|---|
| Zulauf 1: | 50 g Butadien |
| Zulauf 2: | wässrige Emulsion, gebildet aus 50 g Styrol, 1 g Acrylsäure, 0,2 g tert-Dodecylmercaptan, 3,0 g einer 28 gew.-%igen wässrigen Lösung von Texapon® NSO (Fa. Cognis) und 40 g entionisiertes Wasser |
| Zulauf 3: | 0,5 g Natriumperoxodisulfat gelöst in 10 g entionisiertem Wasser |

Die erhaltene wässrige Polymerisatdispersion wies einen Koagulatgehalt von 0,4 Gew.-% auf und der Feststoffgehalt wurde zu 46 Gew.-% bestimmt. Die mittels dynamischer Lichtstreuung ermittelte mittlere Teilchengröße der erhaltenen Polymeriatteilchen betrug 303 nm.

10 ml der erhaltenen wässrigen Polymerisatdispersion wurden in eine Polyethylenschale mit einem Innendurchmesser von ca. 5 cm gegeben und 24 Stunden bei 23 °C und 50 % relativer Luftfeuchtigkeit getrocknet. Es wurde ein klarer flexibler Film erhalten. Die Glasübergangstemperatur des Polymerisats wurde zu -5 °C bestimmt. Darüber hinaus wies das Polymerisat noch einen Schmelzpunkt von ca. 170 °C auf.

**Patentansprüche**

1. Verfahren zur Herstellung einer wässrigen Polymerisatdispersion durch Polymerisation wenigstens eines ethylenisch ungesättigten Monomeren B in wässrigem Medium in Anwesenheit von Teilchen wenigstens eines Polymerisats A (Polymerisatteilchen A) und wenigstens eines Dispergiermittels, **dadurch gekennzeichnet, dass** die Polymerisation des wenigstens einen ethylenisch ungesättigten Monomeren B in Anwesenheit von Polymerisatteilchen A mit einem gewichtsmittleren Teilchendurchmesser ≥ 1 nm erfolgt, wobei das Polymerisat A entweder

    a) durch eine mit wenigstens einem Radikalinitiator initiierte Polymerisation oder
    b) durch eine mit wenigstens einem Übergangsmetallkomplex initiierte Polymerisation

    von wenigstens einem ethylenisch ungesättigten Monomeren A (Monomer A) erhalten wurde
    und die Polymerisation des wenigstens einen ethylenisch ungesättigten Monomeren B (Monomer B)

    i) im Fall a) durch wenigstens einen Übergangsmetallkomplex und
    ii) im Fall b) durch wenigstens einen Radikalinitiator

    initiiert wird.

2. Verfahren nach Anspruch 1, **dadurch gekennzeichnet, dass** das Mengenverhältnis von Polymerisat A zum wenigstens einen Monomeren B 1 : 1000 bis 1000 : 1 beträgt.

3. Verfahren nach einem der Ansprüche 1 oder 2, **dadurch gekennzeichnet, dass** die Polymerisatteilchen A in Form einer wässrigen Primärdispersion eingesetzt werden.

4. Verfahren nach einem der Ansprüche 1 bis 3, **dadurch gekennzeichnet, dass** die mit wenigstens einem Übergangsmetallkomplex initiierte Polymerisation wenigstens eines Monomeren A oder B in Anwesenheit von Kohlenmonoxid erfolgt.

5. Verfahren nach einem der Ansprüche 1 bis 4, **dadurch gekennzeichnet, dass** die mit wenigstens einem Radikalinitiator initiierte Polymerisation mit einem Gemisch Monomerer A oder B erfolgt, welches zu

| | |
|---|---|
| 50 bis 99,9 Gew.-% | Ester der Acryl- und/oder Methacrylsäure mit 1 bis 12 C-Atome aufweisenden Alkanolen und/oder Styrol, oder |
| 50 bis 99,9 Gew.-% | Styrol und/oder Butadien, oder |
| 50 bis 99,9 Gew.-% | Vinylchlorid und/oder Vinylidenchlorid, oder |
| 40 bis 99,9 Gew.-% | Vinylacetat, Vinylpropionat, Vinylester der Versaticsäure und/oder Vinylester langkettiger Fettsäuren |

    enthält.

6. Verfahren nach einem der Ansprüche 1 bis 5, **dadurch gekennzeichnet, dass** die mit wenigstens einem Übergangsmetallkomplex initiierte Polymerisation mit Ethen, Propen, 1-Buten, 1-Penten, 1-Hexen, 1-Octen oder 1-Decen als Hauptmonomer A oder B mit einem Anteil von ≥ 50 Gew.-%, bezogen auf die zur Polymerisation eingesetzte Gesamtmonomerenmenge, erfolgt.

7. Verfahren nach einem der Ansprüche 1 bis 6, **dadurch gekennzeichnet, dass** die Polymerisation des Monomeren B in Anwesenheit einer wasserlöslichen makromolekularen Wirtsverbindung erfolgt, welche einen hydrophoben Hohlraum und eine hydrophile Hülle aufweist.

**Claims**

1. A process for preparing an aqueous polymer dispersion by polymerizing at least one ethylenically unsaturated monomer B in an aqueous medium in the presence of particles of at least one polymer A (polymer particles A) and at least one dispersant, wherein the polymerization of the ethylenically unsaturated monomer or monomers B is carried out in the presence of polymer particles A having a weight average particle diameter of ≥ 1 nm, where the

polymer A has been obtained by means of either

a) a polymerization initiated by at least one free-radical initiator or
b) a polymerization initiated by at least one transition metal complex

of at least one ethylenically unsaturated monomer A (monomer A)
and the polymerization of the ethylenically unsaturated monomer or monomers B (monomer B) is initiated

i) in case a), by at least one transition metal complex and
ii) in case b), by at least one free-radical initiator.

**2.** The process according to claim 1, wherein the ratio of polymer A to the monomer or monomers B is from 1 : 1000 to 1000 : 1.

**3.** The process according to claim 1 or 2, wherein the polymer particles A are used in the form of an aqueous primary dispersion.

**4.** The process according to any of claims 1 to 3, wherein the polymerization of at least one monomer A or B initiated by at least one transition metal complex is carried out in the presence of carbon monoxide.

**5.** The process according to any of claims 1 to 4, wherein the polymerization initiated by at least one free-radical initiator is carried out using a mixture of monomers A or B which comprises

| | |
|---|---|
| from 50 to 99.9% by weight | of esters of acrylic and/or methacrylic acid with alkanols having from 1 to 12 carbon atoms and/or styrene, or |
| from 50 to 99.9% by weight | of styrene and/or butadiene, or |
| from 50 to 99.9% by weight | of vinyl chloride and/or vinylidene chloride, or |
| from 40 to 99.9% by weight | of vinyl acetate, vinyl propionate, vinyl esters of Versatic acid and/or vinyl esters of long-chain fatty acids. |

**6.** The process according to any of claims 1 to 5, wherein the polymerization initiated by at least one transition metal complex is carried out using ethene, propene, 1-butene, 1-pentene, 1-hexene, 1-octene or 1-decene as main monomer A or B in a proportion of ≥ 50% by weight, based on the total amount of monomers used for the polymerization.

**7.** The process according to any of claims 1 to 6, wherein the polymerization of the monomer B is carried out in the presence of a water-soluble macromolecular host compound which has a hydrophobic cavity and a hydrophilic shell.

## Revendications

**1.** Procédé de préparation d'une dispersion aqueuse de polymère par polymérisation d'au moins un monomère éthyléniquement insaturé B dans un milieu aqueux en présence de particules d'au moins un polymère A (particules de polymère A) et d'au moins un agent dispersant, **caractérisé en ce que** la polymérisation du au moins un monomère éthyléniquement insaturé B a lieu en présence de particules de polymère A ayant un diamètre de particule moyen pondéral ≥ 1 nm, le polymère A ayant été obtenu

a) par une polymérisation amorcée par au moins un amorceur radicalaire,
ou
b) par une polymérisation amorcée par au moins un complexe à base de métal de transition,

d'au moins un monomère éthyléniquement insaturé A (monomère A),
la polymérisation du au moins un monomère éthyléniquement insaturé B (monomère B) étant amorcée

i) dans le cas de a), par au moins un complexe à base de métal de transition, et
ii)dans le cas de b), par au moins un amorceur radicalaire.

2. Procédé suivant la revendication 1, **caractérisé en ce que** les proportions du polymère A par rapport au au moins un monomère B sont de 1/1000 à 1000/1.

3. Procédé suivant l'une des revendications 1 ou 2, **caractérisé en ce que** les particules de polymère A sont mises en oeuvre sous la forme d'une dispersion aqueuse primaire.

4. Procédé suivant l'une des revendications 1 à 3, **caractérisé en ce que** la polymérisation, amorcée par au moins un complexe à base de métal de transition, d'au moins un monomère A ou B a lieu en présence de monoxyde de carbone.

5. Procédé suivant l'une des revendications 1 à 4, **caractérisé en ce que** la polymérisation amorcée par au moins un amorceur radicalaire a lieu avec un mélange de monomères A ou B, qui contient

| | |
|---|---|
| de 50 à 99,9 % | en poids d'esters d'acide acrylique et/ou méthacrylique avec des alcanols présentant 1 à 12 atomes de C et/ou du styrène, ou |
| de 50 à 99,9 % | en poids de styrène et/ou de butadiène, ou |
| de 50 à 99,9 % | en poids de chlorure de vinyle et/ou de chlorure de vinylidène, ou |
| de 40 à 99,9 % | en poids d'acétate de vinyle, de propionate de vinyle, d'esters vinyliques d'acide Versatic et/ou d'esters vinyliques d'acides gras à longue chaîne. |

6. Procédé suivant l'une des revendications 1 à 5, **caractérisé en ce que** la polymérisation amorcée par au moins un complexe à base de métal de transition a lieu avec de l'éthène, du propène, du 1-butène, du 1-pentène, du 1-hexène, du 1-octène ou du 1-décène, comme monomère principal A ou B, avec une fraction $\geq$ 50 % en poids par rapport à la quantité totale de monomères mise en oeuvre pour la polymérisation.

7. Procédé suivant l'une des revendications 1 à 6, **caractérisé en ce que** la polymérisation du monomère B a lieu en présence d'un composé hôte macromoléculaire, soluble dans l'eau, qui présente une cavité hydrophobe et une enveloppe hydrophile.